(19) Europäisches Patentamt
European Patent Office
Office européen des brevets

(11) **EP 3 083 146 B1**

(12) **EUROPEAN PATENT SPECIFICATION**

(45) Date of publication and mention
of the grant of the patent:
**15.07.2020 Bulletin 2020/29**

(51) Int Cl.:
**B25B 13/48** *(2006.01)* **B25B 17/00** *(2006.01)*
**B25B 17/02** *(2006.01)* **B25B 23/00** *(2006.01)*
**F16B 39/24** *(2006.01)* **B25B 13/06** *(2006.01)*

(21) Application number: **14843173.7**

(22) Date of filing: **17.12.2014**

(86) International application number:
**PCT/US2014/070996**

(87) International publication number:
**WO 2015/100115 (02.07.2015 Gazette 2015/26)**

(54) **A REACTION WASHER AND ITS FASTENING SOCKET.**

EINE SCHEIBE UND IHRE BEFESTIGUNGSMUFFE

UNE RONDELLE ET SA DOUILLE D'INSTALLATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2013 US 201361916926 P
18.02.2014 US 201461940919 P
24.04.2014 PCT/US2014/035375
13.06.2014 US 201462012009 P**

(43) Date of publication of application:
**26.10.2016 Bulletin 2016/43**

(73) Proprietor: **Hytorc Division Unex Corporation
Mahwah, NJ 07430 (US)**

(72) Inventors:
• **JUNKERS, John, K.
Saddle River, NJ 07458 (US)**
• **ZHANG, Xiaoxing
Somerset, NJ 08873 (US)**
• **JUNKERS, Eric, P.
Hoboken, NJ 07030 (US)**

(74) Representative: **Westphal, Mussgnug & Partner
Patentanwälte mbB
Am Riettor 5
78048 Villingen-Schwenningen (DE)**

(56) References cited:
EP-A2- 0 988 935          WO-A1-01/66964
WO-A1-01/66964          WO-A2-2011/098923
JP-A- 2002 181 026          JP-B2- 4 260 398
US-A- 2 832 395          US-A- 2 856 799
US-A- 4 134 438          US-A1- 2006 090 606
US-A1- 2007 086 874          US-A1- 2007 157 736
US-A1- 2009 142 155          US-A1- 2012 125 163
US-A1- 2012 211 249          US-B1- 6 966 735

EP 3 083 146 B1

**Description**

The invention concerns a reaction washer according to the preamble of claim 1. Such a reaction washer is known from the document US2012/0125163 A1.

There are two methods of tightening and/or loosening a bolt, torque and tension. Until Applicant's innovations, however, it was not possible to perform hydraulic torqueing and hydraulic tensioning with the same tool. Operators needed separate tools to torque and tension threaded fasteners.

Torque has benefits in that it: can be applied to most existing threaded fasteners; is accurate within five percent (5%) of pre-calculated turning resistance of nut; avoids unintended loosening; assures more even circumferential bolt load than tension; and overcomes uneven lubrication applications, foreign particulate underneath the nut or on top of the flange and minor thread damage. Torque, however, has detriments in that it: is subject to thread friction and facial friction, both of which are unknown; requires use of back-up wrench applied to the nut on the other side of the application to keep still the bottom portion of the threaded fastener; results in unknown residual bolt load; and is subject to bolt torsion and side load, both of which adversely affect bolting applications. Sustainable and accurate use of torque in bolting requires establishing thread and bearing facial frictions and eliminating torsion and side load.

Tension has benefits in that it is torsion- and side load-free. Tension, however, has detriments in that it: requires the bolt to stick out by at least its diameter over and about the nut, so that it can be pulled upwards by a tensioner, which often necessitates bolt and nut replacement; is accurate only within 25% of assumed turning resistance; yields unpredictable, manual nut seating; is subject to thread friction and facial friction, both of which are unknown; often over pulls, not stretches the fastener; results in uncontrollable fastener relaxation due to load transfer from puller; and results in unknown residual bolt load. Sustainable and accurate use of tension in bolting requires eliminating stud/bolt pulling and load transfer.

Torque power tools are known in the art and include those pneumatically, electrically and hydraulically driven. Torque power tools produce a turning force to tighten and/or loosen the threaded fastener and an equal and opposite reaction force. Hydraulic tensioners use a puller to apply hydraulic pressure to the bolt, which is usually results in a 10%-20% higher than desired bolt elongation, causing the stud to be over pulled. Then the nut is hand tightened until snug; the pressure on the cylinder is released; the stud springs back; and the load is transferred from the bridge to the nut thereby compressing the joint with clamping force.

Related to torque, traditional reaction fixtures abut against viable and accessible stationary objects, such as adjacent fasteners, to stop the housing of the tool from turning backward while the fastener turns forward. This abutment force applies a pulling force, or side load, perpendicular to the bolt axis on the nut to be tightened or loosened. The reaction force of square drive tools travels through the reaction arm trying to twist off the cylinder end of the tool and/or bend the drive. Note Applicant's innovation in coaxial reaction force transfer found in the HYTORC® AVANTI®. Evolution of traditional reaction fixtures of the prior art are disclosed, for example, in Applicant's U.S. Patent Nos.: 4,671,142; 4,706,526; 5,016,502; Re. 33,951; 6,152,243; D500060; and 7,765,895.

Industry has been moving away from cumbersome and complicated hydraulic tensioners, yet also from torqueing due to the torsion and side load applied to the fastener. Indeed mechanical tensioning is quite popular.

Applicant advanced bolting and solved many bolting challenges with its HYTORC NUT™ mechanical tensioner product lines and drivers and tools for use therewith. This tensioning nut has two sleeves, one inside the other, whereby the inner sleeve is connected with a splined washer to allow an axial movement of the inner sleeve only. It is screwed onto a stud or bolt as a unit. A proprietary driver holds onto the inner sleeve and turns the outer sleeve. The stud is drawn upward along with the inner sleeve and tensioned without over-extension and spring-back, as with a hydraulic tensioner. The inner nut never turns against the threads of the stud under load, eliminating the possibility of bolt thread galling or other damage.

The HYTORC NUT™: mechanically utilizes the action and reaction force of the tool during tightening and loosening; converts torque to torsion-free bolt stretching rather than pulling as in tension; allows precision bolt load calibration with accurate setting of and achieving of desired, residual bolt elongation or load, as compared to torque; eliminates side-load, torsion, load transfer and relaxation, reaction arms, backup wrenches, pullers and bridges; eliminates bolt elongation measurements for critical applications; increases safety, error-free bolting, joint reliability and speed; cuts bolting times by over 50%; and works on all joints without alteration. It improves torque and tension by stretching bolts instead of pulling them preventing unsafe and fastener and joint damaging mechanical rebound. The operator sets and achieves the bolt load anywhere from 30% to 90% of the yield.

Evolution of the HYTORC NUT™ is disclosed, for example, in Applicant's U.S. Patent Nos.: 5,318,397; 5,499,9558; 5,341,560; 5,539,970; 5,538,379; 5,640,749; 5,946,789; 6,152,243; 6,230,589; 6,254,323; 6,254,323; and 6,461,093.

The HYTORC NUT™, however, has its set of challenges. End users must replace standard nuts with precisely machined, treated and lubricated units. Additionally the inner sleeve needs to be relatively radially thick at the point of connection with the washer. Sometimes this connection can hold the entire reaction force applied to the outer sleeve.

In addition, the HYTORC NUT™ is costly to produce and often difficult to sell to cost minimizing, traditional bolting end users. Further in some versions of the HYTORC NUT™, the nut has to be made with two sleeves whose outside diameter has to meet the outside diameter of a regular nut, so both sleeves have less material than a regular nut. This requires the use of high strength materials, which causes reluctance on the part of the customers to change materials and fear of the unknown. In other versions of the HYTORC NUT™, the bolt needs to be altered, which is costly and not easily acceptable by industry.

Applicant further advanced industrial bolting and solved many bolting challenges with its HYTORC WASHER™ product lines and drivers and tools for use therewith. The HYTORC WASHER™ was the first example of reaction washers used as reaction points for torqueing nuts and bolts on helically threaded fasteners. Reaction washers are positioned in the bolt or stud load path and therefore always experience the same and identical loading. In reaction washer systems rotational torque is applied to the top nut or bolt while the opposing reaction torque is imparted on the reaction washer. The top nut or bolt and the mating reaction washer experience the same and identical load and torque. Therefore relative movement is governed only by the frictional forces. The component with the lower friction coefficient will have a tendency to move while the other component will remain relatively anchored.

The HYTORC WASHER™ self-reacting load washer has an inner thread segment connected with the thread of a traditional bolt. It fits under a regular nut and stops the bolt from turning, while providing a reaction point for the driving tool. It is tightened with a proprietary dual socket. An outer socket holds on the washer, and an inner socket turns the regular nut, thereby drawing the stud up through the washer. The tool's reaction force is converted into a holding force which holds the HYTORC WASHER™ stationary. This keeps the segment and thus the bolt stationary when the nut is being turned until bolt elongation causes an axial segment to move in the inside of the HYTORC WASHER™. It improves torque and tension by stretching bolts instead of pulling them. The lack of load-transfer-relaxation, or mechanical rebound, allows stretching to 90% of yield. The HYTORC WASHER™: provides a known bearing facial friction for a more even residual bolt load; requires no precision-machining of the spot face; minimizes the torsion and side-load of the bolting procedure; prevents the bolt from turning along with the nut; creates straight axial bolt stretch without the need for reaction arms and back-up wrenches; increases residual bolt load and evenness of circumferential joint compression; reduces set-up time; increases bolting speed; allows for bolting to become axially oriented and hands-free even on inverted applications; increases bolting safety; and minimizes risk of fastener and joint damage.

Evolution of the HYTORC WASHER™ product lines and drivers and tools for use therewith is disclosed, for example, in Applicant's U.S. Patent Nos.: 6,490,952; 6,609,868; 6,929,439; 6,883,401; 6,986,298; 7,003,862; 7,066,053; 7,125,213; 7,188,552; 7,207,760; and 7,735,397.

The HYTORC WASHER™, however, has its set of challenges. It adds unnecessary height to bolting applications. End users often must replace standard studs and bolts with longer versions due to regulations requiring two or more threads to protrude from the nut upon tightening. In addition, the HYTORC WASHER™ is more costly to produce than traditional washers and often difficult to sell to cost minimizing, traditional bolting end users. Furthermore the HYTORC WASHER™ turns freely and in the opposite direction if the nut friction is higher. During operation the HYTORC WASHER™ has two facial frictions and the nut has a facial and a thread friction, so the overall friction of each is nearly identical, which means that the HYTORC WASHER™ may turn or the nut may turn. To avoid this a pre-load is required which cannot be achieved if both the HYTORC WASHER™ and nut are simultaneously turned down. Finally despite elimination of side load and torsion, corrosion still accumulates in the threads thereby not eliminating thread galling.

Applicant further advanced industrial bolting and solved many bolting challenges with its HYTORC SMARTWASHER™ product lines and drivers and tools for use therewith. This self-reacting all-purpose washer used for tightening and loosening threaded connectors including a nut, a bolt having an axis and introduced into an object with interposition of the washer between the nut and the object so that a first bearing face surface of the washer on one axial side cooperates with a nut and a second bearing face surface of the washer on an opposite axial side cooperates with the object. The washer includes: a radially outer body having a radially inner opening adapted to be larger than a diameter of the bolt and a radially outer surface adapted to absorb a reaction force of a tool; a radially inner segment engageable with a thread of the bolt, located radially inside the outer body in the radially inner opening, and connectable to the outer body with a limited axial frictional movement relative to the body; and a spacer adapted to be located between the radially inner segment and the nut and located also radially inside the outer body in the radially inner opening and axially spaced from the radially inner segment. The outer body, the radially inner segment, and the spacer are assembleable and dissassembleable from one another and are usable jointly or individually.

Applicant used the radially outer body and the radially inner segment interposed together between the nut and the object for applications when even and accurate bolt elongation was necessary. When the nut is turned by the tool at the given force the radially outer body receives the given force in an opposite direction from the tool. The radially outer body stands still while the radially inner segment engaging with the thread of the bolt positively stops the bolt from turning. The bolt only elongates or relaxes. In this case the washer composed of the radially outer body and the radially inner segment functions as a tension washer.

Applicant used the radially outer body, the radially inner segment and the spacer interposed between the nut and the object for applications when a precise bolt elongation was needed and a bolt elongation must be controlled. When the nut is turned by the tool at the given force the radially outer body receives the given force in an opposite direction from the tool. The radially outer body stands still while the radially inner segment engaging with the threads of the bolt positively stops the bolt from turning. The bolt only elongates or relaxes and at the same time the radially inner segment moves axially while the spacer limits the axial movement of the segment. In this case the washer composed of the radially outer body, the radially inner segment, and the spacer functions as a high precision washer.

Applicant used only the radially outer body of the washer interposed between the nut and the object for regular applications when an even and accurate bolt elongation was not necessary. The radially outer surface of the body is used to absorb the equal and opposite reaction force when the tool applies the turning force to the nut. The nut turns but the radially outer body stands still, and in this case the washer composed only of the radially outer body functions as a reaction washer.

The HYTORC SMARTWASHER™ provides many of the advantages of the HYTORC WASHER™ in a lower cost and more flexible package. Evolution of the HYTORC SMARTWASHER™ product lines and drivers and tools for use therewith is disclosed, for example, in Applicant's U.S. Patent No. 8,079,795.

The HYTORC SMARTWASHER™, however, has its set of challenges, similar to those of the HYTORC WASHER™. It adds unnecessary height to bolting applications. End users often must replace standard studs and bolts with longer versions due to regulations requiring two or more threads to protrude from the nut upon tightening. In addition, the HYTORC SMARTWASHER™ is more costly to produce than traditional washers and often difficult to sell to cost minimizing, traditional bolting end users. Notably Applicant believed that even, accurate and precise bolt elongation was not possible when only the radially outer body of the HYTORC SMARTWASHER™ is used as a reaction washer. Additionally use of the threaded insert with the radially outer body yielded even and accurate bolt elongation but travel of the stud is limited to the washer thickness. Travel is hindered further with use of the spacer. Finally despite elimination of side load and torsion, corrosion still accumulates in the threads thereby not eliminating thread galling.

Furthermore the HYTORC SMARTWASHER™ turns freely and in the opposite direction if the nut friction is higher. During operation the HYTORC SMARTWASHER™ has two facial frictions and the nut has a facial and a thread friction, so the overall friction of each is nearly identical, which means that the HYTORC SMARTWASHER™ may turn or the nut may turn. To avoid this a pre-load is required which cannot be achieved if both the HYTORC SMARTWASHER™ and nut are simultaneously turned down.

With conventional reaction washer systems, lubricant must be applied to selectively bias the washer to remain still under higher friction than the nut or stud. This allows the stud or nut to turn and generate load through helical mating threads. The required lubricant biasing is an undesirable and difficult to control step in the process of installing reaction washers. Even small amounts of lubricant on a conventional reaction washer will have the adverse effect of allowing the reaction washer to turn or slip before the nut or bolt. When the washer turns before the helically threaded bolt or nut the system cannot generate bolt load. Improper management of lubrication or frictional surfaces often results in inadvertent sliding or turning of conventional reaction washers.

Other examples of reaction washers in the prior art include those disclosed in U.S. Patent Nos. 7,462,007 and 7,857,566. These reaction washers are meant as substitutes for jam nuts and Belleville washers as they resiliently deform under load to store pre-load or live load energy. In most embodiments, the incorporation of a threaded bore seeks to minimize side loading on the bolt. The area which contacts the object of these concave and/or convex reaction washers is low compared to the total surface area of the bottom washer surface. A threadless bore is disclosed in one embodiment. Friction enhancements include protrusions, like the points of the hexagonal washer shape or planar knurled extensions, which bite or dig into the object surface. A substantially flat reaction washer is also disclosed having no friction enhancements.

Applicant made efforts to increase fastener rotation speeds in fluid operated torque power tools. The HYTORC® XXI® is a fluid operated wrench having: a fluid-operated drive including a cylinder; a piston reciprocatingly movable in the cylinder and having a piston rod with a piston rod end; a ratchet mechanism having a ratchet provided with a plurality of teeth; and at least two pawls operatably connectable with the piston rod end and engageable with a teeth of the ratchet so that during an advance stroke of the piston one of the at least two pawls engages with at least one ratchet tooth while the other of the at least two ratchets over at least one ratchet tooth, while during a return stroke of the piston the other of the at least two pawls engages with at least one ratchet tooth while the one of the at least two pawls ratchets over at least one ratchet tooth. At least one of the at least two pawls is disengageable from and liftable above the teeth of the ratchet. The HYTORC® XXI® also includes a disengaging unit which is activatable by an operator separately from the drive and can act on at least one pawl so as to distinguish it from and lift it above the ratchet teeth. This anti-backlash feature permits the ratchet to turn backwards to release a buildup torsion and material flex, so that the fluid operated wrench can be taken off a job. The HYTORC® XXI® is the first continuously rotating hydraulic wrench in the world. That makes this tool up to three times faster than any other wrench on the market. Note that the benefits of the HYTORC NUT™ and the HYTORC WASHER™ are accentuated when used with the HYTORC®XXI®. The HYTORC® XXI® is disclosed in Applicant's U.S. Patent No. 6,298,752.

Applicant then applied its thorough understanding and innovation in torque power tools to hand-held pneumatic torque intensifying tools, specifically by creating the HYTORC® jGUN® product lines and drivers and tools for use therewith. Applicant markets these tools under the trade names of HYTORC® jGUN® Single Speed, Dual Speed and Dual Speed Plus. Once the nut hits the flange surface the turning degree to tighten or loosen it up is very little. Customers desire high turning speeds to quickly run down or up nuts. Known impact wrenches, which provided a high run down and run off speed, had disadvantages of inaccuracy and slow rotation once the nut hit the flange face. Conversely, known handheld torque power tools were torque accurate, but relatively slow in run up and run down of fasteners. Still they were much faster than impact guns once the nut was turned on the flange face.

The motor housing in known handheld torque intensifying tools was independent to the gear housing such that the torque could not exceed an operator's arm/hand torque resistance. Otherwise the tool's motor housing could not be held and would spin in the operator's hand. There were many motor driven torque multipliers in the market and some of them had two speed mechanisms, some of them reacted on the bolt tip, which requires special bolts, and others with a reaction arm. No matter what torque or speed was applied, their gear housing turned in the opposite direction as the output shaft. At high speed, turning parts in then existing handheld torque intensifying tools required bearings because the gears and the output shaft turned so fast in the gear housing. High torque versions of such tools were too large and too heavy.

The HYTORC® jGUN® product lines includes a tool having a run down or run up speed where the entire gear housing together with the inner gear assembly and the output drive turns at the same high speed in the same direction. The operator simply switches the tool from applying a turning force to the gears and the output shaft in one direction and simultaneously an opposite turning force to the gear housing. Note that HYTORC NUT™ and HYTORC WASHER™ product lines and drivers and tools for use therewith are compatible with the HYTORC® jGUN® Dual Speed. For example, In a higher speed, lower torque embodiment of the HYTORC® jGUN® Dual Speed the drive socket having the nut and the reaction socket having the HYTORC WASHER™ always turned together and at the same higher speed and the same lower torque. The HYTORC WASHER™ and the nut are integrated as one unit by pins until the nut is seated on the HYTORC WASHER™. The torque increases and the pins are disintegrated by shearing, so that the nut is turned with a higher torque and a lower speed while the HYTORC WASHER™ becomes a stationary object and therefore a reaction point. The integration of the HYTORC WASHER™ and a known nut is no longer acceptable because pieces of the broken connection affect the coefficient of friction, can cause thread galling and leave detrimental unwanted deposits at thread interfaces.

When not used with the HYTORC WASHER™, the HYTORC® jGUN® required use of reaction fixtures to divert the reaction force generated during turning of the nut, to a stationary object. The run down speed had to be limited to avoid the reaction arm from being slammed against the adjacent nut at a high speed, which could cause an accident if the operator's extremities were in the way. Abutment of a reaction arm is necessary for the low speed, high torque mode of operation to tighten or loosen fasteners. But the reaction arm is not desirable for the high speed, low torque mode of operation - again to avoid accidents and OSHA recordable situations.

Applicant applied its thorough understanding and innovation in torque power tools having reaction fixtures and the HYTORC® jGUN® product lines to further advance hand-held pneumatic torque intensifying tools. Applicant created the HYTORC® FLIP-GUN® product lines and drivers and tools for use therewith. The HYTORC® FLIP-GUN® includes a positionable reaction arm. When placed in a first position, the torque intensifier unit is switched to a high speed, low torque mode and the reaction arm is usable as a handle by the operator while in a perpendicular direction to the tool axis. When the reaction arm is placed in a second position coaxial to the tool axis the torque intensifier unit is switched to low speed, high torque mode and the reaction arm can abut against a stationary object since the high torque cannot be absorbed by the operator.

Often application characteristics adversely affect bolting jobs and include for example corroded, unclean, kinked, debris-laden, burred, galled, irregular, disoriented, misaligned and/or unevenly lubricated stud and nut threads and surfaces. Often production loss is exacerbated by such adverse bolting application characteristics. Naturally industry seeks to reduce production loss during routine, unforeseen and/or emergency maintenance and/or repair.

Applicant further innovated its hand-held pneumatic torque intensifying tools, specifically by creating the HYTORC® THRILL® product lines and drivers and tools for use therewith. The HYTORC® THRILL® is a handheld dual mode power driven torque intensifier tool which operates in reaction-free and reaction-assisted tightening and loosening of industrial fasteners. It includes: a motor to generate a turning force to turn the fastener; a turning force multiplication mechanism for a lower speed/higher torque mode including a plurality of turning force multiplication transmitters; a turning force impaction mechanism for a higher speed/lower torque mode including a plurality of turning force impaction transmitters; a housing operatively connected with at least one multiplication transmitter; a reaction arm to transfer a reaction force generated on the housing during the lower speed/higher torque mode to a stationary object; wherein during the lower speed/higher torque mode at least two multiplication transmitters rotate relative to the other; and wherein during the higher speed/lower torque mode at least two multiplication transmitters are unitary to achieve a hammering motion from the impaction mechanism. Advantageously the HYTORC® THRILL®: minimizes operator vibration exposure;

provides high rotation inertia in the higher speed, lower torque mode due to a high mass from cooperation between the multiplication and impaction mechanisms, which increases the torque output of the impaction mechanism; runs down and runs off fasteners at high speed without the use of a reaction fixture even when a torque higher than the one absorbable by an operator is required to overcome substantial adverse bolting application characteristics like thread and facial deformation and/or thread galling; and loosens highly torqued or corroded fasteners that are stuck to their joints and tightens fasteners to a desired higher and more precise torque with use of a reaction fixture in the second mode.

The impact mode is not operatable in the THRILL® during lower speed / higher torque (multiplication) mode because: the positionable reaction arm abuts against a stationary object; and the impact mechanism is locked out during the torque multiplication mode. But note that during higher speed / lower torque mode, the turning force from the motor is transferred via the initial stage of the multiplication mechanism to the output shaft to run down or run up a nut or bolt head which exhibits little to no resistance. The impact mechanism activates when the fastener exhibits adverse bolting characteristics thus requiring intermittent force to overcome such deformities.

Evolution of the HYTORC® jGUN®, FLIP-Gun® and THRILL® product lines and drivers and tools for use therewith is disclosed, for example, in Applicant's U.S. Patent Nos. and U.S. Application Nos.: 6,490,952; 6,609,868; 6,929,439; 6,883,401; 6,986,298; 7,003,862; 7,066,053; 7,125,213; 7,188,552; 7,207,760; 7,735,397; 7,641,579; 7,798,038; 7,832,310; 7,950,309; 8,042,434; D608,614; and 13/577,995.

Despite Applicant's recent innovations with the THRILL®, side load and thread galling remain major issues of industrial bolting applications and have not been addressed at all by intensifier tools in the market. Galling is material wear caused by a combination of friction and adhesion between metallic surfaces during transverse motion, or sliding, often due to poor lubrication. When a material galls portions are pulled from a contacting surface and stuck to or even friction welded to the adjacent surface, especially if there is a large amount of force compressing the surfaces together. Galling often occurs in high load, low speed applications. It involves the visible transfer of material as it is adhesively pulled from one surface, leaving it stuck to the other in the form of a raised lump. Galling is usually not a gradual process, but occurs quickly and spreads rapidly as the raised lumps induce more galling.

The corrosion of a long since tightened corroded fastener usually occurs between the engaging threads of the nut and the bolt and the nut and the flange. Corrosion may come from several sources including chemical, heat, humidity and lubrication. On high temperature applications, for example, lubrication applied during tightening dries up and binds the threads together over time. Moreover chemical reactions within and without the vessel often cause galvanic corrosion. During loosening, the inner thread corrosion pushes the dried out grease along the bolt threads. The reaction force applied to the stationary object applies an equal force on the near side of the nut to be turned. Indeed the side load, or abutment force, for a tool may be 3x to 4x its ft.lbs. (or Nm) torque output because the abutment point of the reaction arm is often half if not less than a foot away from the center of the drive. This side load causes the nut and bolt threads to engage with enormous force on the near side where it is applied such that the dried out grease gets piled up in that location when the nut is turned. Irregularities in threads often cannot be overcome. Merely half of the threads between the bolt and the nut are engaged and the threads start gripping. This causes the bolt thread to gall and requires substantially more torque and thus substantially more side load to take the nut off, which can ruin the bolt and the nut threads. The fastener often locks up to the point where all of the turning force is used by the thread friction, which can lead to breakage of the fastener or the tool turning it. The torque power tool originally used to tighten the fastener is often insufficient for loosening the same corroded fastener. Such corroded fasteners may require loosening torque values 1x to 3x more ft.lbs. (or Nm) than the tightening torque and an additional more powerful tool may be needed. High temperature bolting applications such as, for example, in turbines and casings, are usually critical requiring either stainless or precision manufactured fasteners with extremely high replacement costs. In addition the use of fine thread bolts, which is quite popular as of late, multiplies this problem.

Even if no side load is applied by the tool to the fastener, thread galling can still occur as the dried out grease accumulates in the engaging threads during the loosening of the nut. Such loosening requires at one point a higher torque than the original tightening torque, which when applied results in thread galling. This occurs even with the HYTORC NUT™ between the inner and outer sleeves. It is habit in the industry for operators to hit corroded fasteners with a sledgehammer to pulverize corrosion before applying loosening torque. This habit is dangerous, can ruin bolt threads extending over the nut, and is uncivilized. Adverse galling also occurs between the face of the nut and the face of the flange, since the side load changes a perpendicular orientation of the nut to be turned. This in turn increases the turning friction of the nut and makes the bolt load generated by the loosening torque unpredictable which causes adverse aesthetics, non-parallel joint closures, system leaks, and tool, fastener and joint failures.

Known washers may reduce surface galling between the threaded fastener, the nut, and the joint as the washer is made from a harder material. Appendix M of ASME PCC-1-2010 states that: "it is generally recognized that the use of through-hardened steel washers will improve the translation of torque input into bolt preload by providing a smooth and low friction bearing surface for the nut. Washers protect the contact surfaces of the flange from damage caused by a turning nut. These are important considerations when torqueing methods (either manual or hydraulic) are used for bolt tightening." Known washers, however, do not minimize and/or eliminate surface galling and thread galling created by side load. And known washers can move when being tightened so that the washer can rotate with the nut or bolt head rather than remaining fixed. This can affect the torque tension relationship.

Another purpose of installing washers in a typical bolting system is to distribute the loads under bolt heads and nuts by providing a larger area under stress. Otherwise, the bearing stress of bolts may exceed the bearing strength of the connecting materials and this leads to the loss of preload of bolts and the creeping of materials.

Other washers are disclosed in US 2012/125163 A1, US 2009/142155 A1, EP 0 988 935 A1, US 6 966 735 B1, WO 2001/66964 A1, US 2006/090606 A1, US 2007/157736 A1, WO 2011/098923 A2, US 2012/211249 A1 and US 2007/086874 A1.

What is needed is: simplification in tool, driver and washer design and operation; elimination of reaction, bending and pulling forces; increased bolting speed, efficiency, reliability and repeatability, all at low cost.

According to the invention, there is provided a reaction washer according to claim 1.

SPECIFICATION

The embodiments of the present application may be described by the accompanying drawings, of which:

FIGs. 1A-1C are perspective views of a top and a bottom surface and a side view of a first embodiment of a HYTORC® Z® Washer;

FIGs. 2A-2B are upward and downward facing perspective views of a joint to be closed by a threaded fastener including the Z® Washer of FIGs. 1A-1C and a nut, a Z® Fastener;

FIG. 3A-3C are side and perspective views of a reaction arm-free power tool, a HYTORC® Z® Gun, for gall-minimized tightening and/or loosening of the Z® Fastener;

FIGs. 4A - 4B are perspective and side views of the tightened joint and the tightened Z® Fastener;

FIGs. 5A-5D are perspective, perspective cross-sectional and side cross-sectional views of a dual drive coaxial action and reaction assembly, a HYTORC® Z® Socket;

FIGs. 6A-6E are top-down, bottom-up and side views of Z® Washer Friction Coefficient Increasing Treatment Means and related forces acting on the Z® Fastener;

FIGs. 7A-7C are multiple views of various embodiments of Z® Washers with varied dimensions and widths of Z® Washer Friction Coefficient Increasing Treatment Means such as knurl bands;

FIGs. 8A-8L are top-down views of various embodiments of Z® Washers with varied shapes;

FIGs. 8D1-8D3 are perspective views of a top and a bottom surface and a side view of a another embodiment of a Z® Washer;

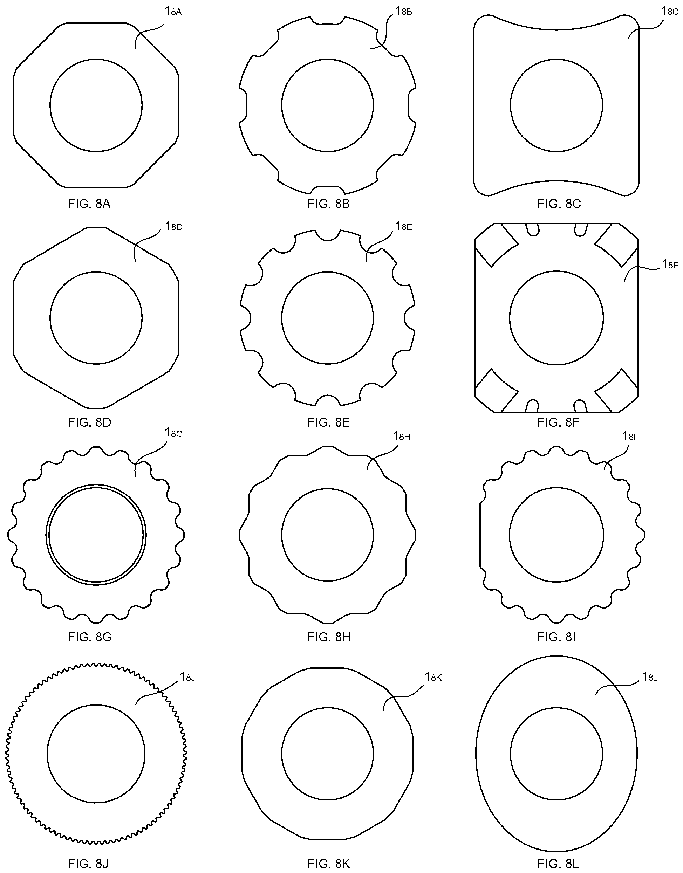

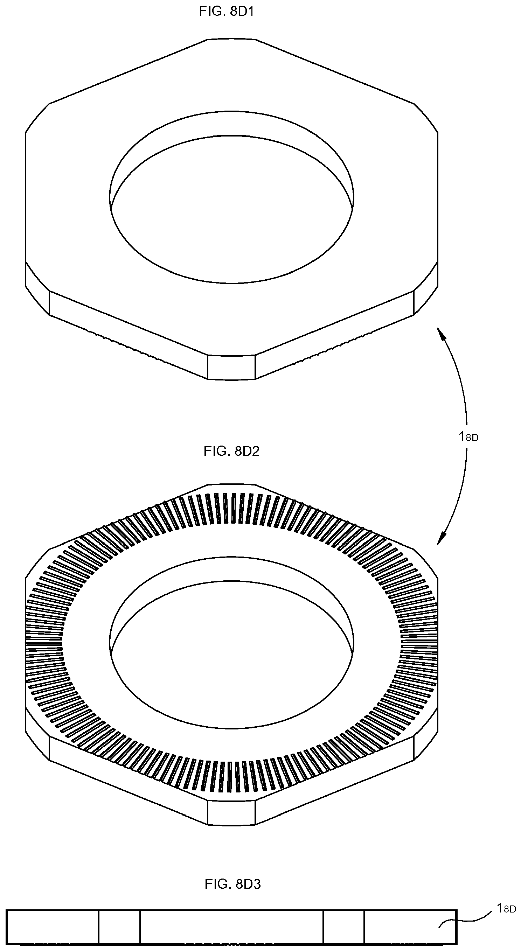

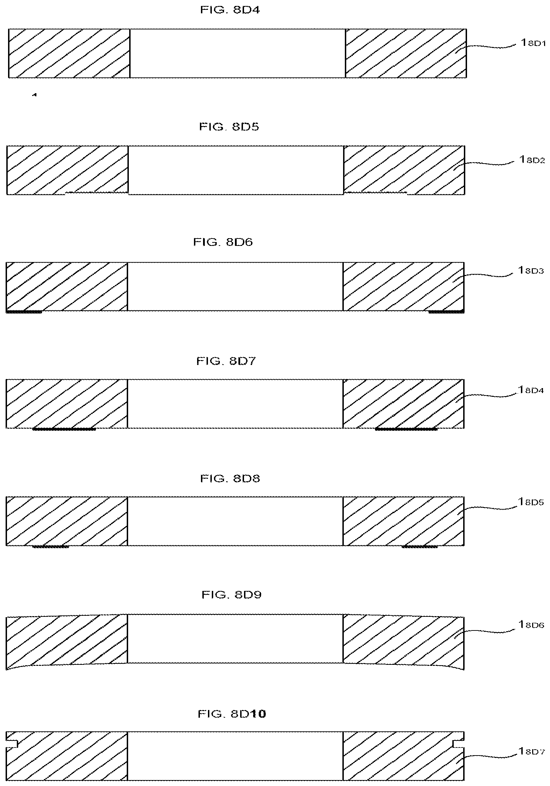

FIGs. 8D4-8D10 are cross-sectional side views of various types, sizes and locations of Z® Washer Friction Coefficient Increasing Treatment Means;

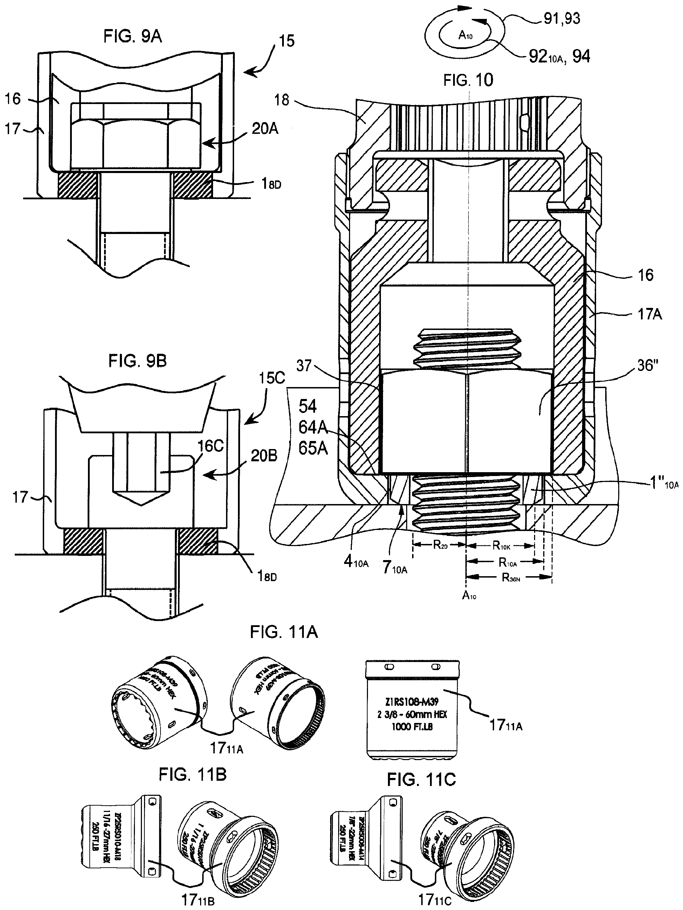

FIGs. 9A-9B are cross-sectional side views of alternative Z® Fastener and Z® Socket types for use with Z® Washers;

FIG. 10 is a cross-sectional side view of an alternative Z® Washer and Z® Socket such that the diameter of the washer is less than that of the nut;

FIGs. 11A-11C are multiple views of various embodiments of Z® Sockets with varied dimensions and widths;

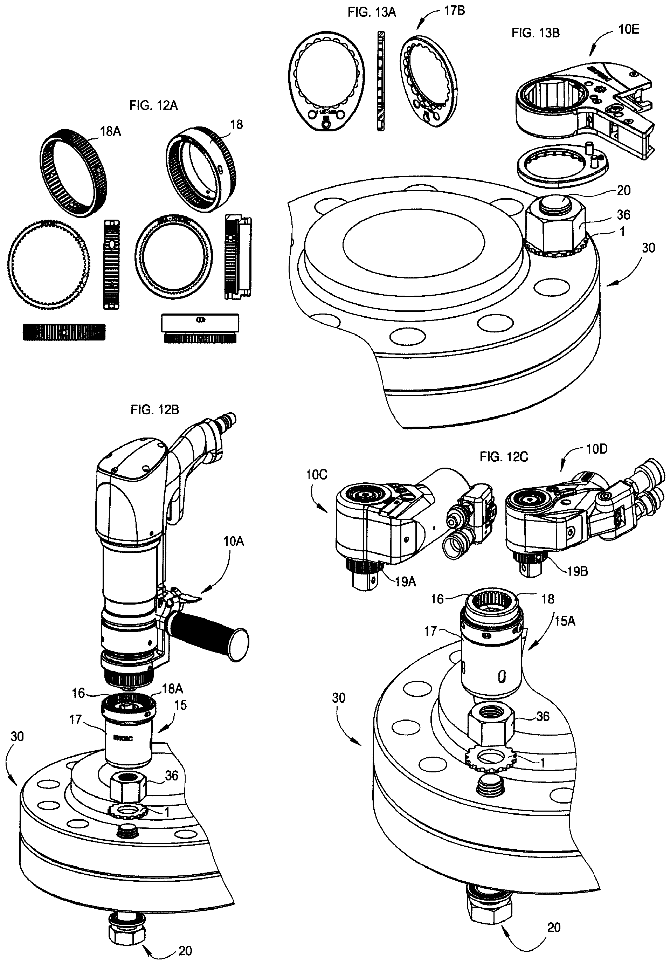

FIGs. 12A-14B are perspective views of the Z® System's application to HYTORC® Torque Tools including spline adapters, reaction plates and offset links;

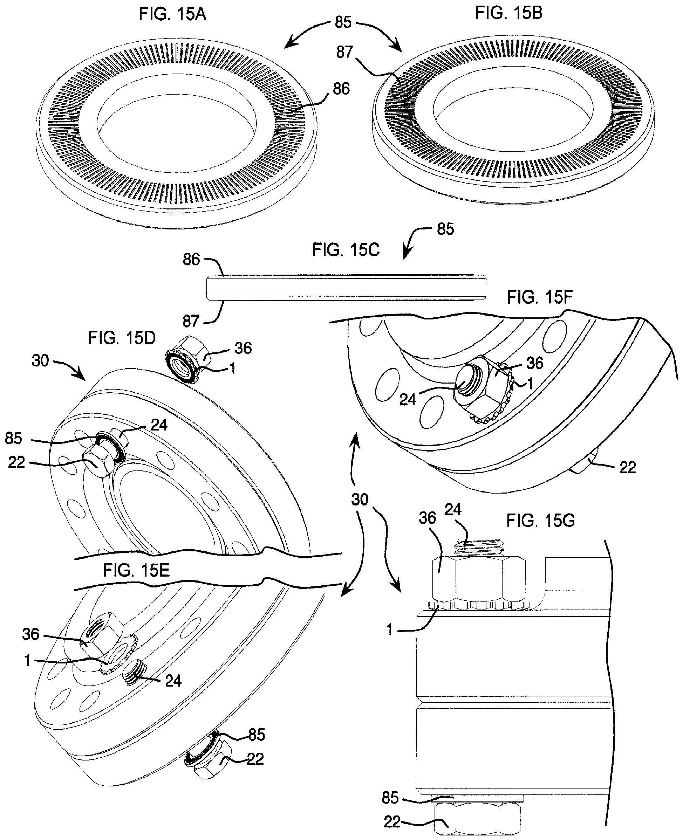

FIGs. 15A-15G are perspective and side views of the application of a HYTORC® Dual Faced Friction Washer to the Z® System;

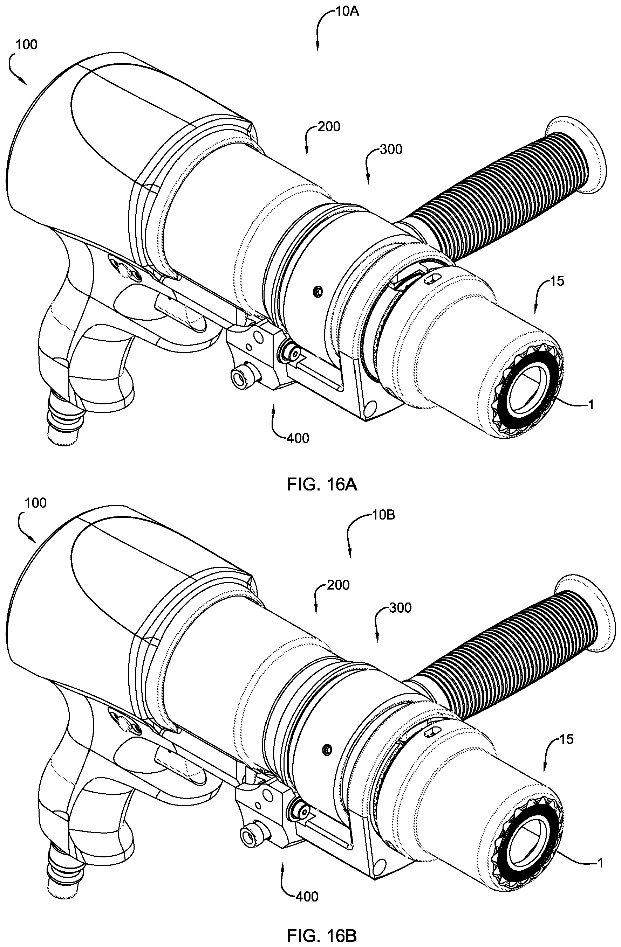

FIG. 16A is a perspective view of an embodiment of the present application in the form of tool 10A in a lower speed, higher torque ("LSHT") mode;

FIG. 16B is a perspective view of an embodiment of the present application in the form of tool 10B in a higher speed, lower torque ("HSLT") mode;

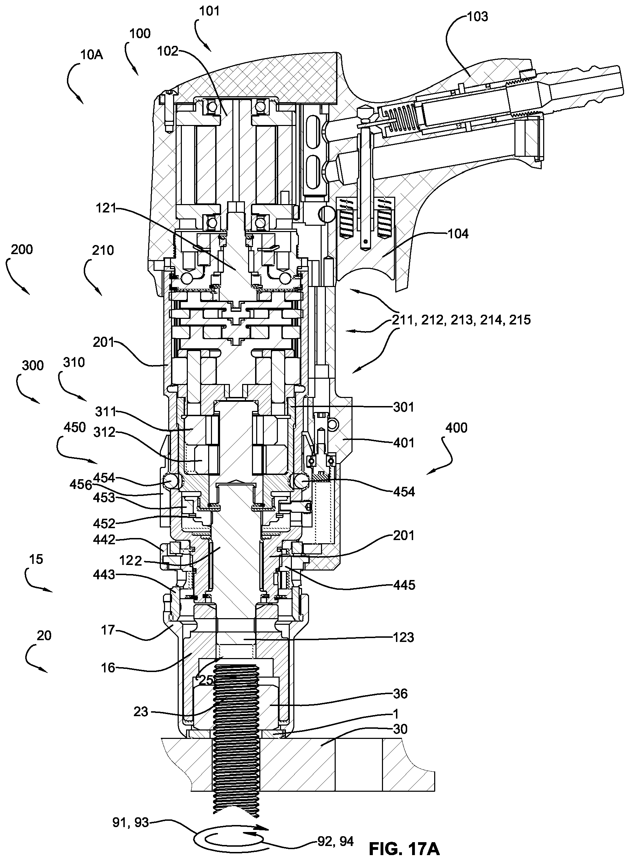

FIG. 17A is a side, cross-sectional view of tool 10A in LSHT mode;

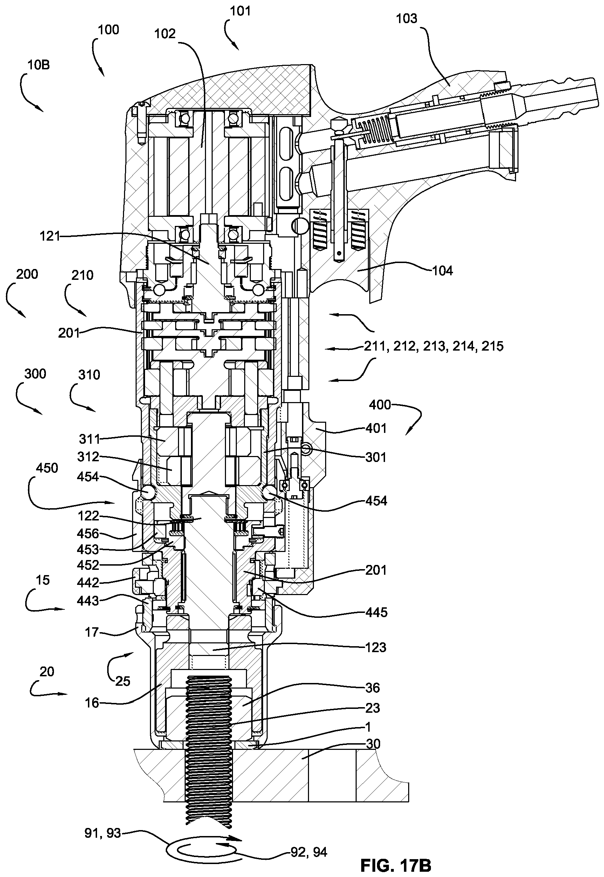

FIG. 17B is a side, cross-sectional view of tool 10B in HSLT mode;

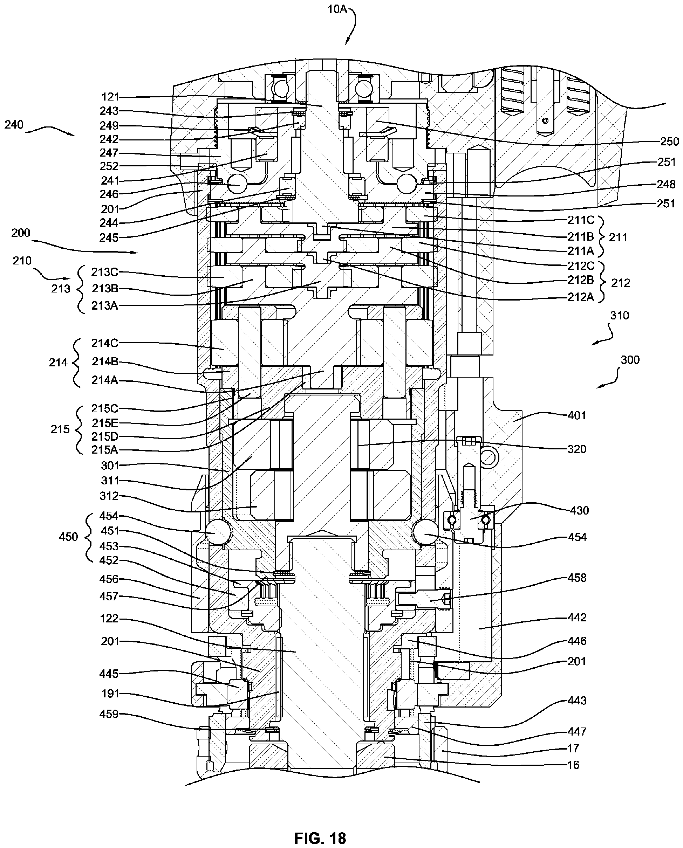

FIG. 18 is a side, cross-sectional view of a turning force multiplication assembly 200 and a vibration force assembly 300 of tool 10A in LSHT mode;

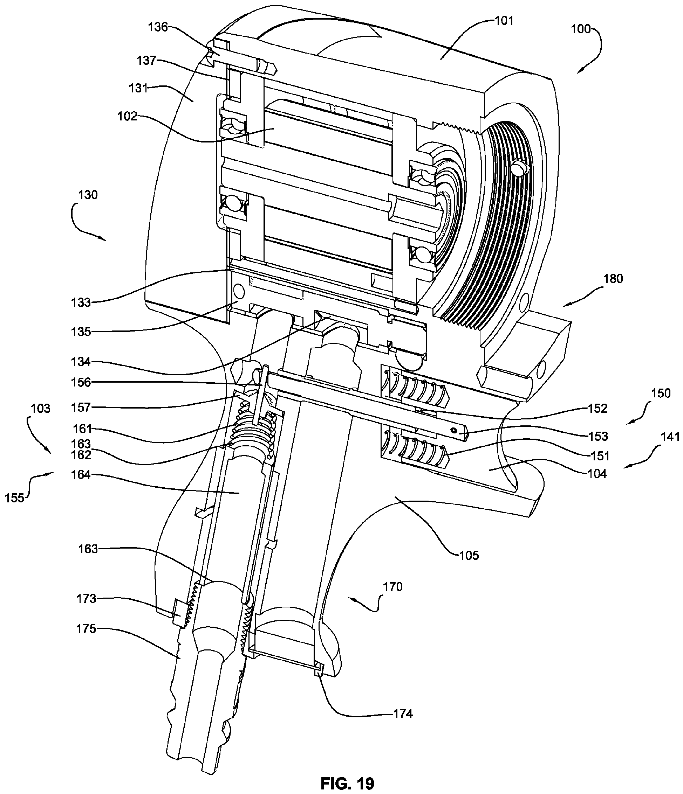

FIG. 19 is a perspective, cross-sectional view of a drive tool housing assembly 101, a drive tool handle assembly 103 and related internal components of tool 10A and tool 10B;

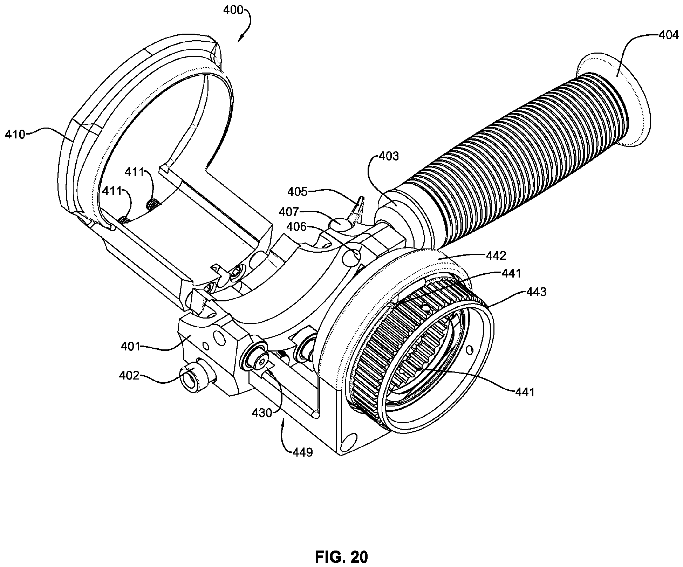

FIG. 20 is a perspective view of a mode shifting assembly 400 of tool 10A and tool 10B;

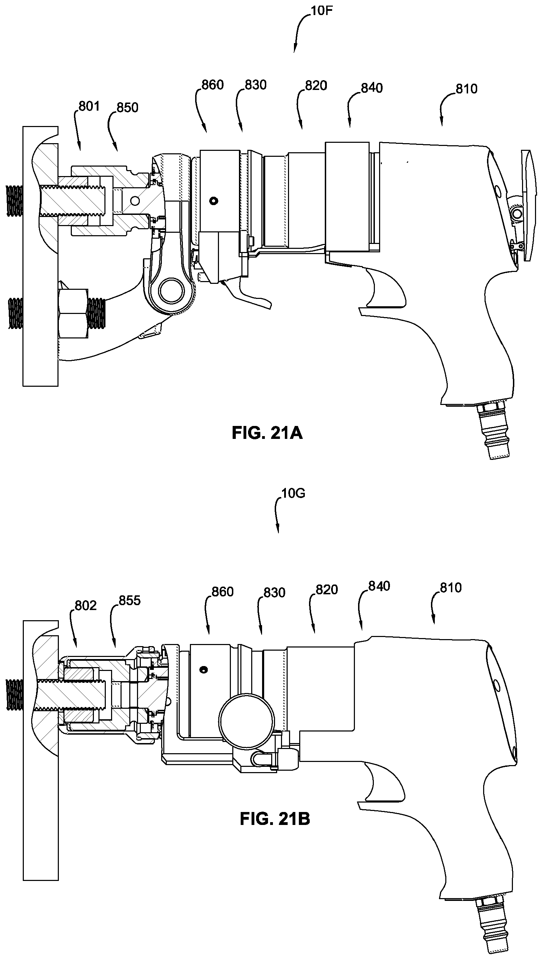

FIG. 21A is a side, cross-sectional view of an embodiment of the present application in the form of a tool 10F;

FIG. 21B is a side, cross-sectional view of an embodiment of the present application in the form of a tool 10G;

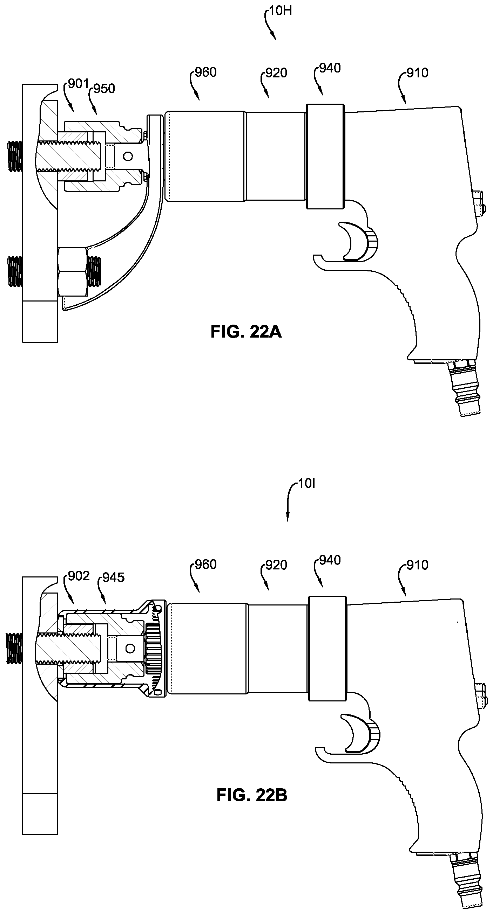

FIG. 22A is a side, cross-sectional view of an embodiment of the present application in the form of a tool 10H; and

FIG. 22B is a side, cross-sectional view of an embodiment of the present application in the form of a tool 101.

**The HYTORC® Z® System.** The present application seeks to protect Applicant's HYTORC® Z® System which involves: tools having multi-speed / multi-torque modes with torque multiplication and vibration mechanisms without use of external reaction abutments; a force transfer means to yield in-line co-axial action and reaction for use with such tools; driving means and shifting means capable of attaching to washers under the nut for use with such tools and force transfer means; associated washers for use with such tools, force transfer means and driving means; and related accessories for use with such tools, force transfer means, driving means and washers.

The HYTORC® Z® System includes the following: Z® Washers located under nuts or bolt heads of various types having engageable perimeters of multiple shapes, sizes, geometries and serrations, such as washer/fastener radius engagement differentials, and frictionally biased faces with relatively higher friction against the flange surface and relatively lower friction against the nut, such as friction coefficient increasing treatment means of various types, sizes and locations; HYTORC Z® Guns incorporating a powerful impact mechanism and a precise torque multiplier in the same tool combining rapid run-down with calibrated torque; HYTORC®Z® Sockets with dual drive coaxial action and reaction having outer sleeves to react on Z® Washers and an inner sleeves to turn nuts or bolt heads; HYTORC® Z® Spline Adapters and Reaction Plates for backwards compatibility with HYTORC®'s torque/tension systems including the AVANTI® and ICE® square drive systems, the STEALTH® limited clearance system, the pneumatic jGUN® series, the FLASH® Gun and LITHIUM Series electric multipliers and more; the combination of HYTORC® Z® Washer and the HYTORC® Dual Friction Washer™ including a dual friction-enhanced face washer for counter-torque under a nut or bolt head on the other side of the joint; HYTORC® Z® Dual Drive Offset Links for tight clearances while using HYTORC®'s torque/tension systems; and HYTORC® Z® Vibration Mechanisms applied thereof.

**The HYTORC® Z® Washer.** International bolting standards call for hardened washers to be placed under industrial threaded fasteners. HYTORC® Z® Washers are hardened washers, proprietary to the Applicant, that become the reaction point directly under the nut or bolt head of the fastener during tightening and/or loosening. HYTORC® Z® Washers are used with industrial threaded fasteners of the kind having a coaxial reaction surface, a stud and either a nut threadedly engageable with the stud or a stud-head connected to the stud. They eliminate any possible pinch points for operators' appendages. Operators need not search for satisfactory stationary objects in which to react. Straight, co-axial tensioning all but eliminates bending and/or side-loading of the stud. They provide a smooth, consistent, low-friction top surface on which turns the nut or bolt head; the top has a polished surface against which the nut or bolt head will turn. They provide a friction enhanced bottom surface against which the tool will react.

Z® Washers protect flange surfaces from damage or embedment and evenly distribute bolt load around the joint due to larger surface area. They can be made in a full range of inch and metric sizes from a full range of materials options for every application. They comply with all ASME, ASTM and API requirements for dimensions, hardness, and thickness. They work with pneumatic, hydraulic, electric and manual torque tools. And with the addition of a companion friction washer, it eliminates the need for a backup wrench to prevent the opposite nut from turning along with the bolt.

Applicant's recent Z® Washer-related research and development includes prototyping and experimentally evaluating different: thicknesses; outer engagement sizes; outer engagement geometries and serrations; low friction coatings and treatments on fastener engaging (top) sides; sizes, shapes and locations of friction enhancements, like knurl patterns, on flange engaging (bottom) sides; chamfers sizes and shapes on bottom, top, inside and outside faces; material specifications; and heat-treatment specifications.

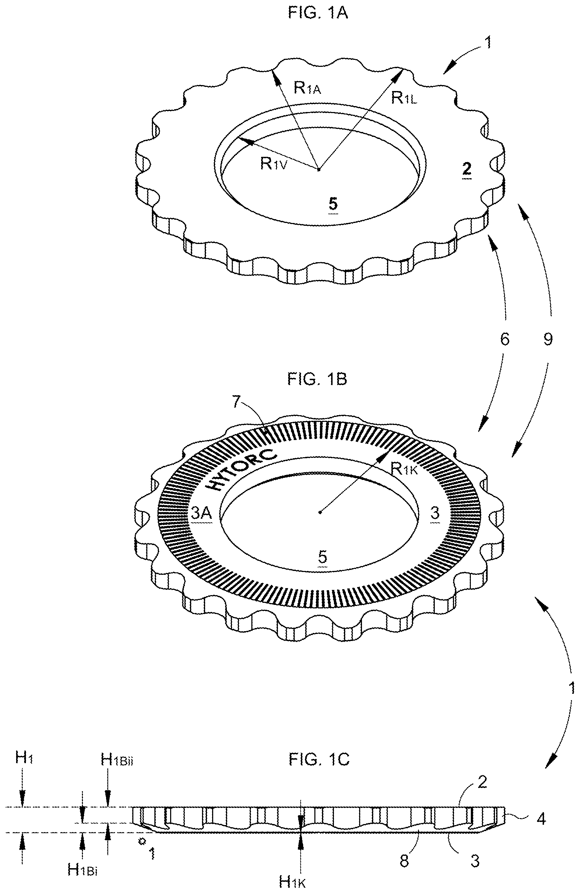

FIG. 1A shows a first embodiment of a HYTORC® Z® Washer 1 for use with HYTORC®'s torque/tension systems. It is a perspective view of a top side, or top bearing face, 2 of washer 1. FIG. 1B shows a perspective view of a bottom side, or a bottom bearing face, 3 of washer 1. And FIG. 1C shows a side view of an edge side, or side bearing face, 4 of washer 1.

Generally washer 1 is an annular shape having an internal void 5. As shown in FIG. 1, washer 1's annular shape includes radially extending lobes 6 which forms a flower-like shape. Generally a top bearing face 2 is smooth with relatively lower surface friction against the nut or bolt head. Note that lubricants may be used on top bearing face 2 to lower surface friction between it and the nut, bolt head or any other such threaded fastener. A bottom bearing face 3 is textured with relatively higher surface friction against the flange surface. Bottom bearing face 3 is shown having a smooth inner surface 3A and rough frictional enhancements, such as knurls, 7 with higher surface friction. Radial raised knurl pattern 7 increases the surface friction of bottom bearing face 3. In the illustrated embodiment, knurled surface 7 takes the form of a ring or annulus located beyond smooth surface 3A. Outer lobes 6 include angled bevel faces 8 formed between bottom bearing face 3 and side bearing face 4.

Washer 1 has, inter alia, annular radius $R_{1A}$, a lobe radius $R_{1L}$, a knurl radius $R_{1K}$ and a void radius $R_{1V}$. Washer 1 has a height $H_1$, a first bevel height $H_{1Bi}$, a second bevel height $H_{1Bii}$, a knurl height $H_{1K}$ and a bevel angle $°_1$.

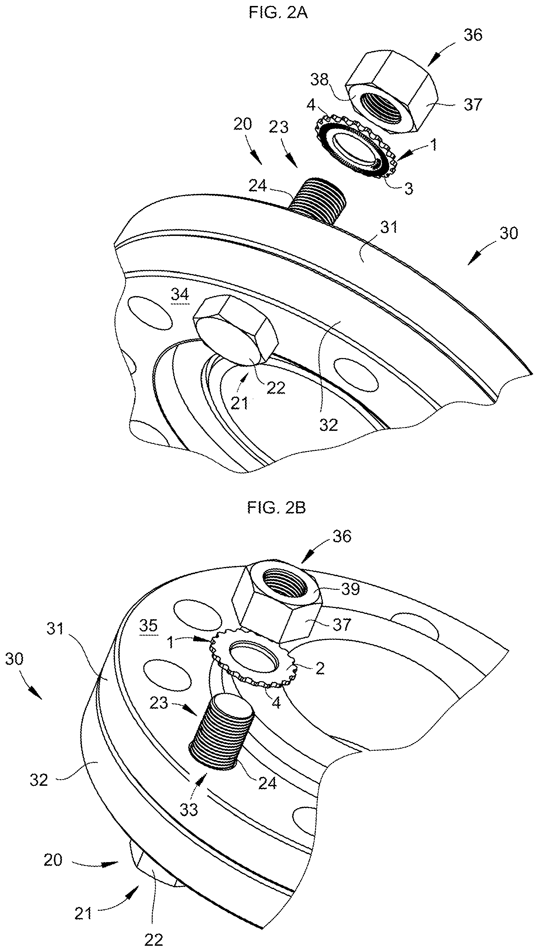

FIG. 2A shows an upward facing perspective view and FIG. 2B shows a downward facing perspective view of a joint 30 to be closed. Joint 30 includes a first member 31 and a second member 32 which are fastened in face-to-face relation by a fastener 20, commonly known in the art as a bolt. Fastener 20 has a first end 21 having a bolt head 22 and a second end 23 having a thread engagement 24. Second end 23 of fastener 20 is inserted through an opening 33 in first and second members 31 and 32 which extends from a bearing face 34 of second member 32 to a bearing face 35 of first member 32. In preparation of a tightening process, washer 1 is placed over second end 23 with bottom bearing face 3 toward bearing face 35. Threaded nut 36 is placed over second end 23.

The Z® Washer is used on only one side of the joint and no other washer should be used under it. Normal bolt and nut lubrication practices should be followed. Lubricant is only necessary on the bolt threads and between the nut or bolt head and the top of the Z® Washer, and should not be used between the washer and the flange. Note that the correct torque value for any given bolt is heavily dependent upon the lubricant used. Normally no lubricant is necessary on the back-side nut or bolt head.

Typical industrial bolting practice is to adjust the stud so that when it is tightened the top end will protrude 2-3 threads above the nut. This is for inspection purposes to ensure that the nut and stud are fully engaged. There is usually no reason for the stud to extend more than this, and any excess length should be adjusted to the other side of the flange so that the socket can engage the entire nut without obstruction. It is permissible in areas of high corrosion for the stud to be flush with the nut after tightening to lessen the risk of thread damage and so that the nut can be more easily removed. Advantageously washer 1 thickness is ideal. If the washer was excessively thick, the fastener system would have insufficient male threads available. Conversely, if the washer was insufficiently thick, it could fail under high compressive loads.

**The HYTORC® Z® Gun (In General).** A reaction arm-free power tool for gall-minimized tightening and/or loosening of an industrial threaded fastener of the kind having a coaxial reaction surface, a stud and either a nut threadedly engageable with the stud or a stud-head connected to the stud includes: a motor to generate a turning force; a drive to transfer the turning force; a turning force multiplication mechanism in a housing including a turning force multiplication transmitter for all torque modes from lower resistance to higher resistance; and at least one vibration force mechanism including a vibration transmitter for an intermittent force mode operatable during all torque modes from lower resistance to higher resistance.

Standard air impact wrenches hammer the bolt with uncontrolled force with high noise and excessive vibration. The HYTORC Z® Gun is a precision torque multiplier which produces consistent and measured power on bolt after bolt without the uncontrolled force, high noise and/or excessive vibration of standard air impact wrenches. The Z® Gun is the first torque-accurate reaction arm-free pneumatic bolting tool in the world. It ensures even and accurate bolt load. The Z® Gun incorporates a powerful impact mechanism and a precise torque multiplier in the same tool combining rapid run-down with calibrated torque. It is operated by a pistol grip trigger and features a directional control switch for tightening or loosening, a speed selection handle for high and low speeds, and a self-reacting socket drive which engages the Z® Washer under the nut. The impact mechanism zips nuts on or off regardless of corrosion or thread flaws. The torque multiplier mechanism breaks out fasteners or tighten them down. It works with the Z® Washer so no external reaction arm, no pinch points and no inaccurate side loads. It does any bolting job faster, safer and better than ever before, all with one tool.

The Z® Gun has built in dual-speed capability that is controlled by simply and quickly shifting from high speed rundown mode to low-speed torquing power and back again. In the high speed mode the dual socket rotates at several hundred revolutions per minute but torque is limited so that the tool cannot spin or kick back in the operator's hands. Shifting the selector upwards locks the tool in to the power/torque mode and the nut or bolt is tightened to the desired torque automatically, based on calibrated pneumatic fluid pressures.

Advantageously, the Z® Gun addresses industrial concerns and issues with hydraulic, pneumatic or electric torque intensifying tools. It: maximizes the benefits of and eliminates the detriments of torque and tension; maximizes the benefits of and eliminates the detriments of HYTORC NUT™, HYTORC WASHER™, HYTORC® AVANTI®, HYTORC® XXI®, HYTORC® jGUN®, HYTORC® FLIP-Gun® and HYTORC®THRILL®- which can gall thread engagements due to side load and accumulation of dried up corrosion; minimizes operator vibration exposure; provides higher inertia in the intermittent force mode due to a higher mass from cooperation between the multiplication and impaction mechanisms, which increases the torque output of the impaction mechanism; runs down and runs off fasteners at higher speed without the use of a reaction arm even when a torque higher than the one absorbable by an operator is required to overcome adverse bolting application characteristics; loosens highly torqued and/or corroded fasteners stuck to their joints and tightens fasteners to a desired higher and more precise torque with use of a coaxial reaction surface in the higher resistance torque mode. The vibration force mechanism can be activated while the nut is tight to pulverize dried corrosion before applying full torque to the nut for loosening. This results in less torque necessary to loosen the industrial threaded fastener, and the pulverized dried grease does not pile up or concentrate on portions of threads. In addition during tightening and loosening the nut stays parallel to the joint face and threads are not subjected to the enormous and irregular side load making the facial and thread friction more consistent. This assures a more even torque load and thus, even joint compression to avoid leaks and gasket failure in tightening. Furthermore tool use is simplified, risk of operator error reduced and operator safety increased.

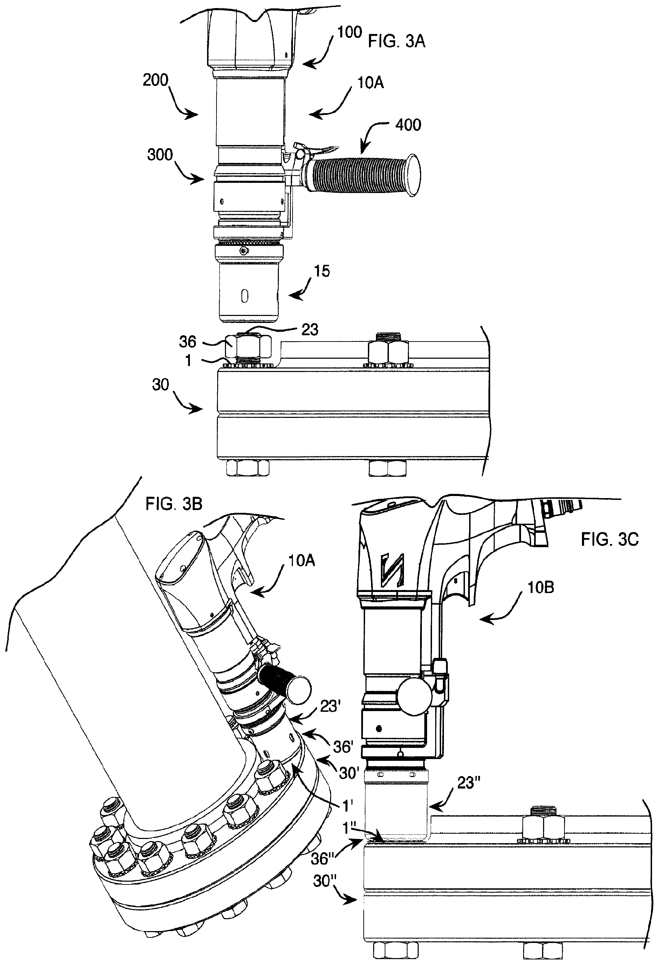

Industrial threaded fastener 20 is typically tightened using a torque, tension and/or torque and tension tool hydraulically, pneumatically or electrically driven. FIGs. 3A, 3B and 3C show a reaction arm-free power tool 10, the HYTORC® Z® Gun, for gall-minimized tightening and/or loosening of fastener 20. Tool 10 includes a motor to generate a turning force; a drive to transfer the turning force; a turning force multiplication mechanism in a housing including a turning force multiplication transmitter for all torque modes from lower resistance to higher resistance; and at least one vibration force mechanism including a vibration transmitter for an intermittent force mode operable during all torque modes from lower resistance to higher resistance. Note that tool 10 operates in a higher speed, lower torque ("HSLT") mode, as shown as tool 10A of FIGs. 3A and 3B, and a lower speed, higher torque ("LSHT") mode, as shown as tool 10B of FIG. 3C.

Tool 10A of FIGs. 3A and 3B and tool 10B of FIG. 3C includes: a drive input and output assembly 100; a turning force multiplication assembly 200; a vibration force assembly 300; a mode shifting assembly 400; and a dual drive output and reaction socket assembly 15, such as the HYTORC®Z® Socket.

In HSLT mode tool 10A either: compresses washer 1 between seated nut 36 on pre-loaded fastener 20 on pre-tightened joint 30 to a pre-determined pre-tightening torque; decompresses washer 1 between nut 36 on unloaded fastener 20 on loosened joint 30 from the pre-determined pre-tightening torque; and/or vibrates pressurized washer 1 between tightened nut 36 on loaded fastener 20 on tightened joint 30 to adequately pulverize bolt thread corrosion. In LSHT mode tool 10B either: pressurizes washer 1 between tightened nut 36 on loaded fastener 20 and tightened joint 30 to a pre-determined tightening torque; and/or compresses washer 1 between seated nut 36 on pre-loosened fastener 20 on pre-loosened joint 30 from the pre-determined tightening torque.

In HSLT mode tool 10A either: runs down either nut 36 or both nut 36 and washer 1 on fastener 20 with the turning force in the one direction to seat nut 36 and compress washer 1 on pre-loaded fastener 20 on pre-tightened joint 30 to a pre-determined pre-tightening torque; runs up either seated nut 36 or both seated nut 36 and compressed washer 1 on pre-loosened fastener 20 on pre-loosened joint 30 with the turning force in the opposite direction from the pre-determined pre-loosening torque; or vibrates (impacts) tightened nut 36 over pressurized washer 1 to apply vibration to adequately pulverize thread corrosion. In LSHT mode tool 10B either: tightens seated nut 36 on compressed washer 1 on pre-loaded fastener 20 on pre-tightened joint 30 with the turning force in the one direction to the pre-determined tightening torque and applies the reaction force in the opposite direction to compressed washer 1; or loosens tightened nut 36 over pressurized washer 1 on loaded fastener 20 on tightened joint 30 with the turning force in the opposite direction from the pre-determined tightening torque and applies the reaction force in the one direction to pressurized washer 1.

During operation tool 10B in LSHT mode switches to tool 10A in HSLT mode upon unseating nut 36 and decompressing washer 1 at the pre-determined pre-loosening torque. During operation tool 10A in HSLT switches to tool 10B in LSHT mode upon either: seating nut 36 and decompressing washer 1 at the pre-determined pre-tightening torque; or adequate pulverization of thread corrosion. Note that the operator uses mode shifting assembly 400 to switch the tool from LSHT mode to the HSLT mode or visa versa. Note that mode shifting assembly 400 is a manual switch, but may be automatic. Similarly, note that activation or deactivation of vibration (impaction) force assembly 300 may occur either manually or automatically. Note that LSHT mode can be switched from torque regulated to vibration assisted or vice versa, and that HSLT mode can be switched from vibration regulated to torque assisted or vice versa. Note that vibration (impaction) force assembly 300 can continue operating even if washer 1 begins or ceases rotation. And note that LSHT mode may be vibration assisted for loosening nut 36 to help overcome chemical, heat and/or lubrication corrosion and avoid bolt thread galling.

Applying torque to a fastener creates facial friction, thread friction as well as bolt load. Friction and bolt load are inversely proportional: as friction increases, the amount of bolt load generated decreases. The speed at which a fastener is tightened has a pronounced affect on the magnitude of friction, and thereby bolt load generated in a joint to be closed. Advantageously the Z® Gun is able to utilize the principle that thread and under-head coefficients of friction decrease as rotation speed increases.

The Z® Gun operates, for example, as follows. Suppose a job requires tightening 1½" studs with 2⅜" nuts to 520 ft-lbs of torque using a Z® Gun-A1. The Z® Gun-A1 is used for ranges of 300-1200 ft-lbs of torque. The Z® Gun-A1 comes with a standard drive size of ¾" square drive and has dimensions (LxWxH) of 11.92" by 3.29" by 9.47". The drive output housing has radius of 1.98". The handle height and width are 6.94" and 2.12", respectively. The rundown and final torque RPMs range approximately from 4000 to 7, respectively. The turning force of the tool is determined by air pressure supplied by a filter/regulator/lubricator (FRL). The operator consults the corresponding pressure/torque conversion chart for this value. In this case, 520 ft-lbs of final torque corresponds to a pneumatic pressure 50 psi. The operator thus sets the air supply pressure of the FRL to 50 psi.

Per FIG. 3B, tool 10A runs down nut 36 until snug against the flange in HSLT mode. Washer 1' is compressed between seated nut 36' and seated joint 30'. In run down (HSLT) mode, the shifter (mode shifting assembly 400) is in the downward position and tool 10A is held with both hands.

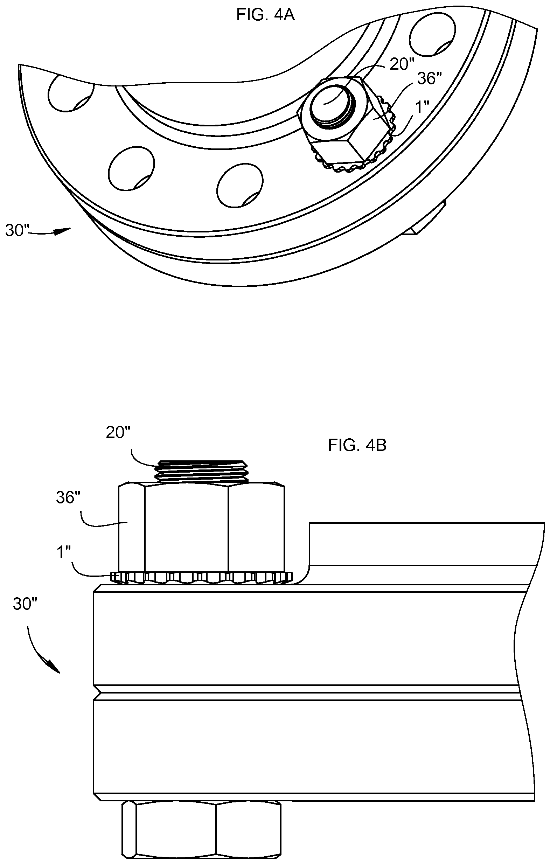

Per FIG. 3C, to begin torqueing in LSHT mode, the operator pulls shifter 400 toward him in the upward position. Seated nut 36' is engaged ensuring that outer reaction socket 17 fully encompasses compressed washer 1'. Note the lack of pinch points because both hands are safely out of the tightening zone around seated nut 36'. The operator depresses the trigger until tool 10B stalls and will no longer advance inner drive socket 16. The operator has applied 520 ft-lbs of torque to tightened nut 36" and pressurized washer 1", and every other nut will get the same tightening force as long as the FRL pressure is maintained. FIGs. 4A and 4B show a tightened joint 30" which includes tightened fastener 20", tightened nut 36" and pressurized washer 1".

Note that bevel faces 8 assist washer 1 in clearing weld fillets formed between flanges and pipes in joint 30 and other clearance issues. Further bevel faces 8 assist the outer reaction socket in engaging and rotatably coupling with washer 1. Bevel faces 8 may also accept modifications made to outer reaction socket 17 to allow for use on inverted bolting applications.

The operator reverses the process for removal of tightened nut 36", this time beginning in LSHT mode. The effects of time and corrosion can make nuts and/or bolts more difficult to remove than they were to tighten. Since achieving a specific torque value is not of concern in loosening, the operator may turn up the FRL air pressure to at or near its maximum, giving the tool nearly full power. A directional control is shifted to loosen. The operator applies tool 10B to the application and positions an inner drive socket 16 on tightened nut 36" and an outer reaction socket 17 on pressurized washer 1". The operator pulls speed-selector 400 upwards, activates tool 10B and proceeds to loosen tightened nut 36" until it can be turned by hand and react off of pressurized washers 1". The operator shifts speed-selector 400 to the HSLT position to run off nut 36. Recall that the vibration force mechanism can be activated while the nut is tight to pulverize dried corrosion before applying full torque to the nut for loosening. This results in less torque necessary to loosen the industrial threaded fastener, and the pulverized dried grease does not pile up or concentrate on portions of threads.

Note that portions of this specification associated with FIGs. 16-23 provide a thorough discussion of the HYTORC Z® Gun and related tools.

**HYTORC® Z® Sockets.** Z® Washer benefits are optimized when used with HYTORC® Z® Sockets having dual drive coaxial action and reaction. Outer sleeves react on Z® Washers and inner sleeves turn the nuts or bolt heads adjacent (on top of) the washers. Several dual socket systems of the present application and proprietary to HYTORC® do exactly that. First and foremost, the Z® Gun having a Z® Socket is the fastest and easiest way to get all the benefits of this reaction-free technology. Portions of the outer socket surround the Z® Washer and rotatably couples with splines on the body of the torque tool. The inner socket connects to the tool's drive and turns the nut. The Z® Gun impact action runs the nut down rapidly and then shifts effortlessly to the controlled torquing mode while reacting against the Z® Washer. There are no external pinch points or unwanted side loads. For the first time controlled torque is possible with an air tool, without sacrificing speed and flexibility. These proprietary socket assemblies exceed all of the applicable ANSI standards for toughness and safety and come in a full range of inch and metric sizes to fit any job.

Applicant disclosed important characteristics about washers in its HYTORC WASHER™-related patent filings. Washers positioned in the load path either turn with the nut (or bolt head) or stand still; never will washers turn in opposite direction as the nut due to facial friction and load compression. Applicant's innovation determined the efficacy of reacting off in-line washers. Notwithstanding friction benefits from the threaded insert, the HYTORC WASHER™ is viable because of this observation.

Generally joints to be closed of the present application are tightened by way of a bolt and a nut. The bolt, having a hardened washer adjacent its bolt head, is inserted through holes in the joint. The nut, having an adjacent geometrically engageable hardened washer, is screwed to the bolt. An inner action socket turns the nut and tightens the joint and an outer reaction socket transfers the tool's reaction force to the geometrically engageable hardened washer. As the action torque to the joint increases, the reaction force of the action torque proportionately increases. The rotatably coupled outer socket is geometrically engaged with the hardened washer which eliminates the rotation of the tool relative to the operator due to the reaction force.

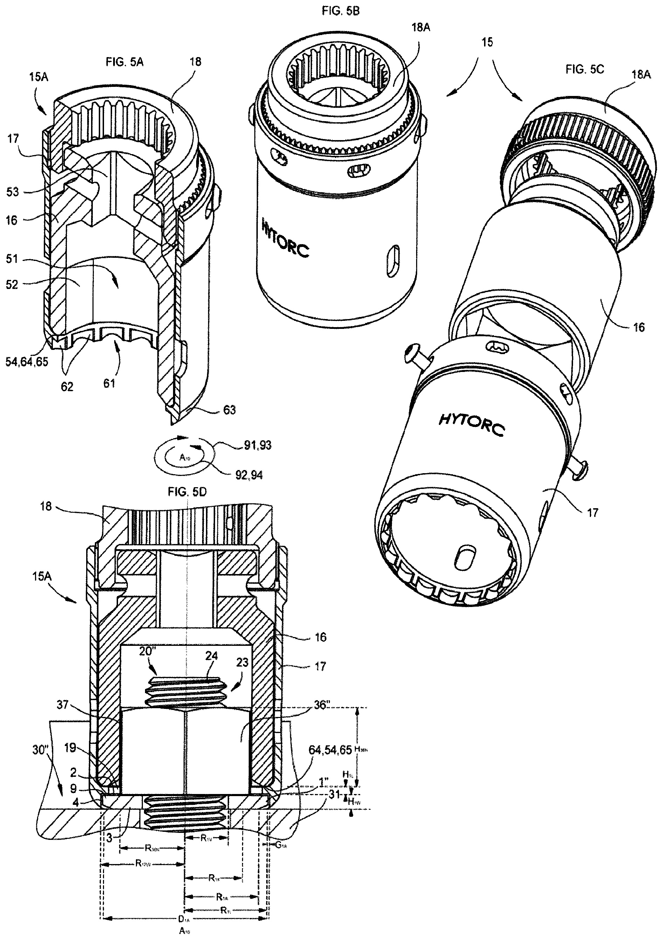

FIGs. 5A, 5B and 5C are perspective views of dual drive coaxial action and reaction assembly 15. FIG. 5A is an assembled cross section perspective view. FIG. 5B is an assembled perspective view. FIG. 5C is an exploded perspective view. FIG. 5D is a plan cross section view of dual drive coaxial action and reaction socket assembly 15 on tightened joint 30".

In HSLT mode, as shown in FIGs. 3A and 3B, socket assembly 15 is substantially for transferring a vibrated form of a turning force to nut 36 and washer 1 in one direction. In LSHT mode, as shown in FIG. 3C, the results of which are shown in FIGs. 4A and 4B, socket assembly 15 is substantially for transferring a multiplied form of the turning force to nut 36 in the one direction and the corresponding multiplied form of a reaction force in another direction to washer 1, which acts as a stationary object.

Referring to FIG. 5A, inner drive socket 16 includes an inner edge 52 with a nut or bolt head engaging means 51. Outer reaction socket 17 has a lower inner edge 62 with a washer 1 engaging means 61 for engaging washer outer edge 4, or outer socket engaging means 9. Inner drive socket 16 is substantially disposed inside outer reaction socket 17. They are coupled together via a socket coupling means 18. The sockets cooperatively and relatively rotatable in opposite directions through the tool housing. Lower inner edge 62 and its washer 1 engaging means 61 and washer 1 outer edge 4 and its outer socket engaging means 9 are substantially vertical. Outer reaction socket 17 includes a lower outer edge 63 having a tapered surface inclined inwardly toward a bottom of lower inner edge 62. A bottom face 54 of inner socket 16 rotates on and/or over an upper face 64 of a lower inner edge 65 of outer socket 17. Note that socket coupling means 18 is designed for use with HYTORC®'s hydraulic square drive tools. Note that socket coupling means 18A is designed for use with HYTORC®'s pneumatic and electric torque guns, such as tool 10A (and 10B).

Washer 1 has, inter alia, annular radius $R_{1A}$, lobe radius $R_{1L}$, knurl radius $R_{1K}$ and a center bore radius $R_{1V}$. Washer 1 has a height $H_{1W}$, a first bevel height $H_{1Bi}$, a second bevel height $H_{1Bii}$, a knurl height $H_{1K}$ and a bevel angle $°_1$. Nut 36 has a hex radius $R_{36N}$ and a height $H_{36N}$. Outer reaction socket 17 has washer engagement radius $R_{17W}$ which includes a washer/outer socket gap width $G_{1A}$ which assists outer reaction socket 17 in easily engaging washer 1. A void space 19 having separation height $H_{1L}$ provides sufficient clearance between inner and outer sockets 16 and 17. Inner socket 16 is free to rotate on upper face 64.

But note U.S. Patent No. 8,631,724, having Issue Date of 21 January 2014, entitled "FASTENING SOCKETS, WASHERS AND FASTENERS USED WITH THE WASHERS AND THE FASTENING SOCKETS". Outer socket engagement means of the '724 patent do not engage with the outer surface of a washer, but merely an "outer edge portion", thereby increasing failure probabilities.

Outer reaction socket 17 of tool 10A is idle and inactive in HSLT mode. It is not spline engaged with housing of turning force multiplication assembly 200. Impaction and/or vibration force transmitters of vibration force assembly 300 are spline engaged to an output drive shaft, which turns inner drive socket 16 to run up or down nut 36 on fastener 20. Outer reaction socket 17 of tool 10B, however, is rotatably coupled and geometrically engaged with washer 1 under nut 36. Upon seating of nut 36', compressed washer 1' serves as the stationary object by which the housing of turning force multiplication assembly 200 reacts via reaction socket 17. With the housing of turning force multiplication assembly 300 held still, the turning force multiplication transmitters tighten seated nut 36" via the turning force output drive shaft.

During operation of any embodiment of tools having reaction socket assemblies of the present application the drive socket turns either a nut or a bolt head. During operation of one embodiment of such a tool the reaction socket stands still during HSLT mode. During operation of another embodiment of such a tool the reaction socket turns in the same direction as the drive socket in HSLT mode but stands still in LSHT mode. And during operation of another embodiment of such a tool the reaction socket either stands still or turns in the opposite direction with the drive socket in HSLT but stands still in LSHT mode.

In other words the drive socket is always operatively connected with either the nut or the bolt head during all torque modes from lower resistance to higher resistance. And the reaction socket is either: operatively connected to the housing and the coaxial reaction surface to transfer a reaction force to the coaxial reaction surface during the higher resistance torque mode; operatively connected to the housing and the coaxial reaction surface during either the lower resistance torque mode or the intermittent force mode; or operatively connected to the housing and operatively disconnected from the coaxial reaction surface during either the lower resistance torque mode or the intermittent force mode.

In other words a torque power tool of the present application includes: a drive means to connect with a drive socket of a dual drive coaxial action and reaction socket assembly to turn a nut or a bolt head; a reaction means to connect with a reaction socket of the dual drive coaxial action and reaction socket assembly to pass on the reaction force to a washer; a connecting means between the drive and reaction means; at least two modes of operation including a high speed low torque mode and a low speed high torque mode; wherein the drive socket is turned in one direction by the drive means during both the low speed high torque mode and the high speed low torque mode; wherein the reaction socket is turned in the one direction when the connecting means between the drive and the reaction means is activated in the high speed low torque mode but does not turn the washer when the connecting means is deactivated in the high torque low speed mode.

And in other words a torque power tool of the present application includes: a drive means for connecting a drive socket to a nut or a bolt head; a first reaction means and a second reaction means for connecting a reaction socket to a washer; at least two modes of operation - a high speed low torque mode and a low speed high torque mode; wherein the drive socket is turned by the drive means during both modes of to turn the nut or the bolt head; wherein the reaction socket connects to a washer underneath the nut or the bolt head; a first reaction means which stops said reaction socket from turning in the low speed high torque mode while the washer takes up a higher magnitude reaction force; and a second reaction means which stops the reaction socket from turning in the high speed low torque mode while an operator takes up a lower magnitude reaction force. In this case, a turning force multiplication assembly housing spline adaptor is the first reaction means. And a mode shifting assembly switching arm having a spline adaptor is the second reaction means.

Dual sockets, particularly reaction sleeves (sockets), of the present application were developed for use in conjunction with all of HYTORC®'s electric, hydraulic, and pneumatic torque/tension systems. It was necessary to minimize outside diameters of reaction sleeves to provide maximum clearance between tool reaction systems and the surrounding fastener environments. Minimizing outside diameters of reaction sleeves required minimizing outside diameters of action sockets too.

Generally numerous part geometries were devised for sleeves, sockets and adaptor rings of the present application. All potential components were prototyped and evaluated experimentally in HYTORC®'s research and development center. Quality tests included subjecting the parts to their particular application load for countless cycles. Various material and heat-treatment alternatives were also evaluated experimentally.

Note that portions of this specification associated with FIGs. 16-23 provide additional discussion of the HYTORC Z® Sockets.

**HYTORC® Z® Washer - Fastener Radial Engagement Differential.** In torque tools with reaction fixtures of the prior art, reaction torque is equal and opposite to the action torque. But the reaction force applied by the reaction arm is far greater on a nearby stationary object. The reaction force is multiplied by distance, the reaction arm length. Indeed side load, or reaction abutment force, for a tool may range from 2x to 4x its torque output at abutment points of a distance of, for example, ½ foot from the turning force axis of the drive. That greater reaction force is concentrated at only that one location. Naturally shorter reaction arms transfer smaller reaction abutment force to abutment points closer to the turning force axis of the drive. It stands to reason that an extremely short reaction arm would transfer a reaction abutment force of similar, yet slightly larger, magnitude as the torque tool output because the abutment point is extremely close to the turning force axis of the drive.

Irregularities in threads yield adverse bolting characteristics. Among other detriments, side load causes the nut and bolt threads to engage with enormous force on the near side where it is applied such that the dried out grease gets piled up in that location when the nut is turned. Often only small fractions of total thread surface areas are engaged between the bolt and the nut. This causes bolt threads to gall, which requires substantially more torque and thus substantially more side load to loosen the nut. This chain of events often ruins bolt and nut threads. The fastener locks up or seizes at the point where all of the turning force is used by thread friction, which can lead to breakage of the fastener or the tool turning it.

The torque power tool originally used to tighten the fastener is often insufficient for loosening the same corroded fastener. Such corroded fasteners may require loosening torque values ranging from 2x to 4x higher than the tightening torque requiring a more powerful tool for breakout loosening. High temperature bolting applications such as, for example, in turbines and casings, are usually critical requiring either stainless or precision manufactured fasteners with extremely high replacement costs. In addition the use of fine thread bolts, which is popular as of late, multiplies this problem.

Similarly reaction torque is equal and opposite to action torque in HYTORC® dual drive coaxial action and reaction socket assembly. But the reaction force intensification characteristic is applicable too. Referring back to Applicant's HYTORC WASHER™ and SMARTWASHER™ related patent disclosures, these washers had substantially similar radius as that of the nut. Reaction forces applied to these washers were of similar magnitude as the equal and opposite reaction torque. This helps to explain why HYTORC WASHERs™ and SMARTWASHERs™ sometimes rotated with the nut or bolt head.

Industrial bolting professionals have recognized the necessity of using relatively similar fastener component sizes. In normal bolting operations it matters not whether the bolt head or the nut is torqued. This assumes, of course, that the bolt head and the nut face are of the same diameter and where contact surfaces are the same to yield the same coefficient of friction. If they are not then it does matter. Say the nut was flanged and the bolt head was not. If the tightening torque was determined assuming that the nut was to be tightened but the bolt head was subsequently tightened instead then the bolt could be overloaded. Typically 50% of the torque is used to overcome friction under the tightening surface. Hence a smaller friction radius will result in more torque going into the thread of the bolt and hence being over tightened. If the reverse were true, namely that the torque was determined assuming that the bolt head was to be tightened and then the nut was subsequently tightened, the bolt would be under tightened.

Just as an extremely long reaction arm applies an extremely greater reaction force to a nearby stationary object, an extremely short reaction arm applies a reaction abutment force of similar, yet slightly larger, magnitude as the torque tool output. In this sense outer reaction socket 17 can be considered a 360° reaction arm applying that reaction abutment force of similar, yet slightly larger, magnitude as the torque tool output infinitely around outer edge 4 of washer 1. Indeed outer reaction socket 17 applies a greater reaction abutment force to reaction washer 1 under nut 36. This is achievable only by having a slightly larger washer 1 - outer reaction socket 17 geometrically shaped engagement than a nut 36 - inner drive socket 16 geometrically shaped engagement. Applicant's fundamental observation about washers coupled with this new observation ensures a still washer in which to react.

Referring to FIG. 5D, outer edge 4 of pressurized washer 1" extends beyond an outer edge 37 of tightened nut 36". Notably a reaction force 92 acting in another direction 94 received by washer outer edge 4 is greater than an action torque 91 acting in one direction 93 received by nut 36. Pressurized washer 1" absorbs reaction force 92 of tool 10B such that tool 10B applies action torque 91 to seated nut 36' and applies a slightly greater but opposite reaction force 92 to washer outer edge 4. Seated nut 1' turns but compressed washer 1' stands still. This relative positioning, namely, that washer outside edge 4 is farther from the center of rotation, or turning force axis $A_{10}$, than nut outer edge 37, is one innovative aspect of the present application. Reaction force 92 acts through the effective lever arm of outer socket 17 a distance $R_{1A}$ away from turning force axis $A_{10}$ which tends to hold washer 1 still. As a result of the differential in radius of the outer polygonal engagements, washer 1 remains stationary on joint 30 rather than rotate with nut 36 as fastener 20 is tightened or loosened.

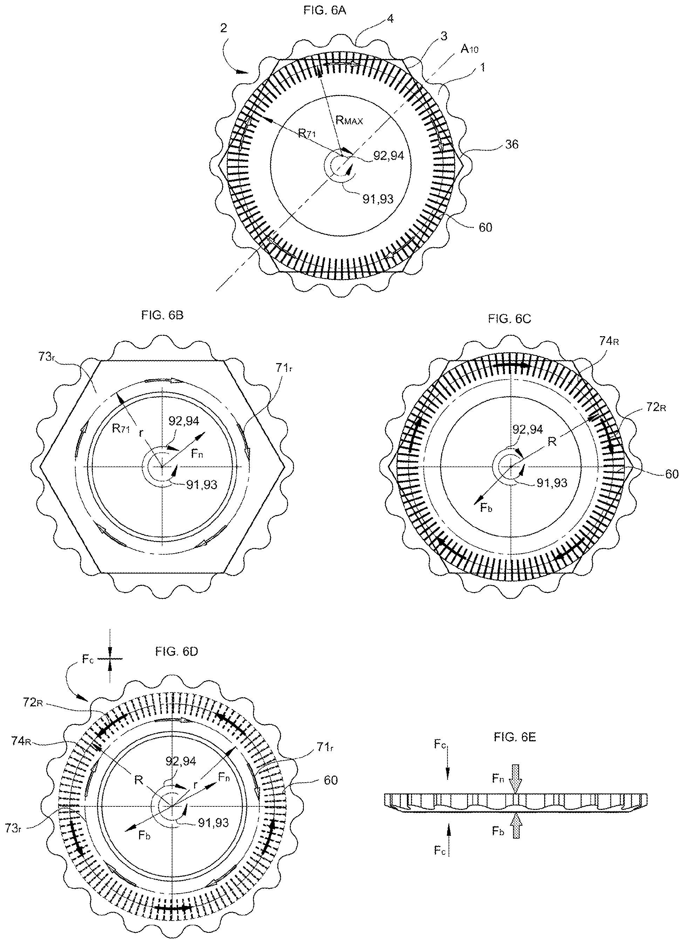

**HYTORC® Z® Washer Friction Coefficient Increasing Treatment Means.** Referring to FIGs. 6, this shows a bottom-up view of bottom bearing face 3 formed with friction coefficient increasing treatment means 60. Nut 36 is shown adjacent smooth top bearing face 2. Frictional forces are lower between nut 36 and washer 1 at the engagement of smooth contact surfaces 2 and 38 than the engagement of rough contact surface 3 and flange surface 30. Thus nut 36 tends to rotate and washer 1 tends to remain still.

FIGs. 6B, 6C, 6D and 6E explain this phenomena. FIG. 6B shows nut 36 being torqued and compressed against top bearing face 2 of washer 1. Top bearing face 2 and a bottom bearing face 38 of nut 1 are smooth. During a tightening process, a friction force $71_r$ between nut 36 and washer 1 acts in one direction 92. A compression force $F_n$ of nut 36 acts on washer 1 in a downward direction along turning force axis $A_{10}$. A radius r is an effective frictional radius, or the distance from turning force axis $A_{10}$ to a center of frictional area $73_r$ of bottom bearing face 38 of nut 36.

FIG. 6C shows washer 1 being compressed against bearing face 35 of joint 30. Bearing face 35 and bottom bearing face 3 of washer 1 are engaged frictionally and with load. During a tightening process, a friction force $72_R$ between washer 1 and joint 30 acts in another direction 93. A compression force $F_b$ of joint 30 acts on washer 1 in an upward direction along turning force axis $A_{10}$. A radius R is an effective frictional radius, or the distance from turning force axis $A_{10}$ to a center of frictional area $74_R$ of bottom bearing face 3 of washer 1.

FIG. 6D shows a combination of FIGs. 6B and 6C. FIG. 6E shows $F_n$ and $F_b$. A compression force $F_c$ generated by nut 36 tightening on fastener 20 is equal on both sides of washer 1 such that $F_n = F_b = F_c$. Friction force $(F_R) = \mu * F_c$, where $\mu$ is the coefficient of friction. Note that the effective frictional radius of friction coefficient increasing treatment means 60, or R, is greater than the effective frictional radius of nut 36, or r, such that $Fc * R > Fc * r$. This means that the torque to overcome friction between nut 36 and washer 1 is smaller than the torque which would overcome the friction between friction coefficient increasing treatment means 60 of washer 1 and joint 30.

Referring back to the example in FIG. 6A, friction coefficient increasing treatment means 60 is shown, for example, as radial raised knurl pattern 7, having inner radius $R_7$. Radial raised knurl pattern 7 is shown positioned as far from turning force axis $A_{10}$ as feasible at a substantially maximum radius, $R_{MAX}$, to maximize torque $(\tau_{RMAX})$ while still below a compression area of nut 36. As the clamping force increases, knurl pattern 7 sets itself on the flange face 35 material, thereby resisting the attempt of washer 1 to rotate with nut 36. The coefficient of friction, $\mu$, remains constant and is multiplied by constant compression force $F_c$ to yield a constant friction force (Fb). The reaction torque $(\tau_R)$ is F * R. Maximum torque can be achieved at substantially maximum radius, $R_{MAX}$, such that $\tau_{RMAX} = F * R_{MAX}$. In other words, effective frictional radius, R, of washer 1 is greater than effective frictional radius, r, of nut 36. Generally effective friction radius of Z® Washers of the present invention are greater than an effective friction radius of the nuts or bolt heads. Note that principles of mechanics (statics, dynamics, etc.) to describe traditional bolting applications and associated forces are well known in the art.

Explained another way, washer 1's resistance to sliding or rotating while reaction torque is applied is a function of the load and coefficient of friction. The following expressions depict the relationships between sliding force, friction, load and torque in a reaction washer:

$$\text{Sliding Force Resistance} = (\text{Coefficient of Friction}) \times (\text{Load})$$

$$F_R = \mu * F_N$$

where: $F_R$ = Force (Resistance), $\mu$ = Coefficient of Friction, and $F_N$ = Force Normal (Weight or Load).

In a threaded fastener the force to overcome friction and create sliding or rotation is a function of applied torque and the friction radius. So the force to create sliding can be expressed as:

$$F_S = (\text{Torque}) / (\text{Friction Radius})$$

$$F_S = \tau / r_F$$

where: $F_R$ = Force (Sliding), $\tau$ = Torque and $r_F$ = Effective Friction Radius. Therefore in a fastener:

$$F_S = F_R$$

$$\tau / r_F = \mu * F_N,$$

such that:

$$\tau = \mu * r_F * F_N$$

The above expression shows that the resistance to sliding under torque is function of the coefficient of friction, load and radius of the friction surface. This effective friction radius is usually taken as the mean of the central bore hole and outer bearing face radii. As the friction radius is increased the resistance to sliding or turning increases. It is therefore understood that a means of increasing the washer friction radius relative to the nut or bolt friction radius will anchor the washer relative nut or bolt. Because they are equal and opposite torque forces, reaction washers and nuts or bolts will always have identical applied bolt load torque forces. Coefficients of friction are identical in fasteners when similar materials and lubricants are applied throughout. By increasing the friction radius of the washer bearing face it can therefore be ensured that washers will remain anchored relative to nut or bolt in all fastening situations.

The washer friction radius is increased by biasing the bearing surface outward. This can be done by adding surface features to the outermost area of the bearing face while neglecting the innermost areas. Because of high loads and typical embedment of mating surfaces only slight selective surface conditioning is required to effectively increase the friction radius.

The position and coverage area of friction coefficient increasing treatment means, for example the raised knurl feature, and its relation to the footprint of the nut or bolt head ensures effectiveness of the Z® System. The bottom surface of the washer includes outwardly positioned friction coefficient increasing treatments, defining a frictional portion for engagement with the surface of the joint. The frictional portion is disposed about an outer peripheral portion of the bottom surface and extends inwardly to a width less than the total width of the washer body. The frictionally enhanced surface tends to lock up the nut by maintaining bolt load, thereby preventing unintended loosening. In other words the bottom surface of the washer is roughened in order to assure substantial friction between the joint and the washer upon tightening or loosening of the fastener. Frictional forces developed between the washer and the joint are substantial and reliably serve to prevent the undesirable rotation of the washer upon loading and during the initial stage of unloading.

Unexpectedly experimentally repeatable performance is not possible if frictionally enhanced surface 7 covers completely or is positioned at or relatively near the central bore of lower surface 3 of washer 1. Most of the time, this configuration fails and washer 1 turns with nut 36.

The Z® Washer concept similarly works with merely an outer ring having friction coefficient increasing treatment means. It is not necessary to have both smooth inner portion, i.e. inner surface 3A, and a roughened outer portion. But the different surface textures of the underside of the washer does assist with frictional biasing on the bottom surface as a whole and between the bottom and the top sides of the washer.

This invention seeks to define, claim and protect a reaction-type washer with frictional area shifted outward, e.g. a reaction washer friction radius outer biasing with respect to the nut. This produces a novel and unobvious shift of the friction surface radius preventing the washer from spinning before the nut. Prior art reaction-type washer without frictional biasing tended to spin, especially when used on hard surfaces. They were marginal in performance and worked only in ideal conditions on ideal surfaces. Spinning reaction-type washers undesirably caused damage to the flange faces, inefficient industrial bolting and system maintenance operations, and economic loss. Still washers with outer positioning of friction coefficient increasing treatment means of the present invention maintain unblemished flange faces, increase efficiencies of industrial bolting and system maintenance operations and minimize economic loss.

Relating back to FIG. 5D, relative washer / fastener radial engagement differentials, namely, that washer 1 outside edge 4 is farther from the center of rotation, or turning force axis $A_{10}$, than nut 36 outer edge 37, serve as another embodiment friction coefficient increasing treatment means of the present invention. Greater washer/flange surface area having longer engagement radius increases facial friction over lesser nut/washer surface area having shorter engagement radius.

Explained another way, in bolting applications of the present invention, friction torque generated by the washer-flange surface area interaction is greater than friction torque generated by the nut-washer surface area interaction. The washer remains stationary so that it is possible to attach a holding socket non-rotatably relative to the housing of the tool. The holding socket is brought into engagement with the outer polygonal edge of the washer while the tightening tool actionably engages with the nut. Upon tightening the washer is compressed under the nut and the housing of the tool is secured against rotation relative to the washer. The washer absorbs the reaction moment and reaction force of the tool housing that is opposite to the tightening torque and diverts it into the compressed washer. No external reaction means is necessary.

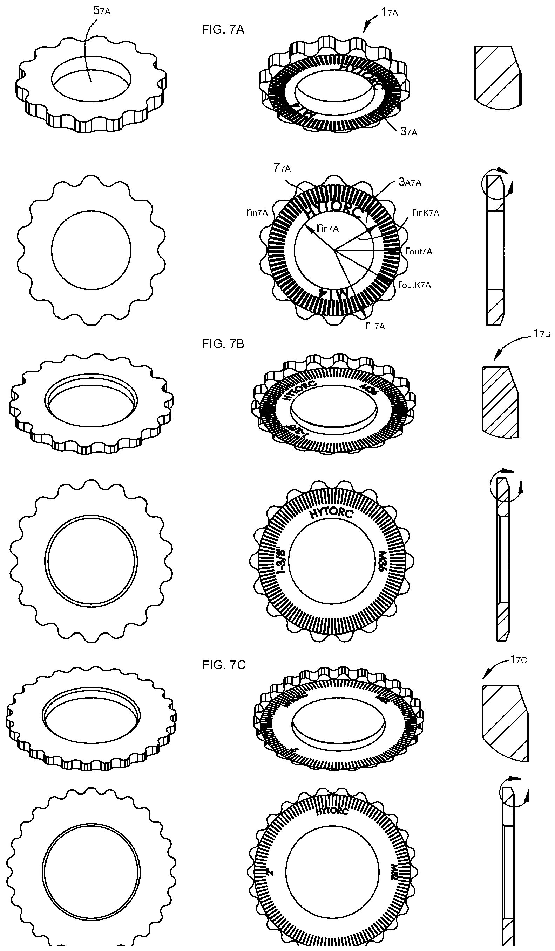

FIGs. 7A, 7B and 7C show varied washer dimensions and widths of friction coefficient increasing treatment means such as knurl bands. FIG. 7A shows a washer $1_{7A}$ with internal void, or central bore, $5_{7A}$ for use with an M14 bolt, a relatively small size. Knurl band $7_{7A}$ encompasses a majority of surface area lower bearing face $3_{7A}$. Nonetheless lower bearing face $3_{7A}$ has a smooth inner surface $3A_{7A}$ adjacent void $5_{7A}$. Indeed smooth inner surface $3A_{7A}$ is formed between void $5_{7A}$, which accepts fastener 20, and knurl band 77A. Washer $1_{7A}$ has an inner radius, $r_{in7A}$, an outer radius, $r_{out7A}$, an inner knurl radius, $r_{inK7A}$, an outer knurl radius, $r_{outK7A}$, and a lobe radius, $r_{L7A}$. Similar dimensions are applicable to but not shown in FIGs. 7B and 7C.

Recall that HYTORC WASHERs™ and HYTORC SMARTWASHERs™ added unnecessary height to bolting applications. Thicknesses of Z® Washers of the present invention are typically small compared to their outer diameters. For example, the average ratio of the thickness $H_{1W}$ to the outer diameter $D_{1A}$ of the washers disclosed in the drawings is about 0.08 and may range from 0.04 to 0.12. Other ratios describe Z® Washers of the present invention, including: the average ratio of height $H_{1W}$ of the washer to the height $H_{36N}$ of the nut is about 0.170 and may range from 0.10 to 0.30; the average ratio of the diameter $D_{1A}$ of the washer and diameter $D_{36}$ of the nut is about 1.10 and may range from 0.80 to 1.40. These ratios are provided merely for descriptive purposes,

Note the difficulty in quantifying meaningful characteristics of the Z® System frictional biasing. For example, relative surface areas of washers and nuts (or bolt heads) minimally effect friction biasing outcomes with the Z® System. Indeed relatively small threaded fasteners may have vastly different ratios than relatively large threaded fasteners.

The most informative data involves calculation of the effective friction radius of the washer and the threaded fastener. Z® Washers work so reliably because friction coefficient increasing treatments are selectively biased away from the central bore and towards outer edge. The effective friction radius of the washer is greater than the effective friction radius of the threaded fastener. For example, the effective friction radius of a washer having a radial band of friction coefficient increasing treatments on its bottom side is the center of that band. Note that this discussion correctly assumes the ideal case where bolt load is distributed uniformly under the nut or bolt head due to the use of the Z® Washer.

Note that friction enhancements may not be necessary in many applications, although they ensure that the washer stays still on all applications, regardless of: relative washer/fastener surface areas or engagement radii; relative fastener/joint material hardness; and relative fastener/joint surface treatments like lubricants (molycoat, etc.) or coatings (paint, etc.). The friction enhancements become impactful at the beginning of a tightening process where very little or no load is present on the stud and/or nut. This friction bias initiates washer hold every time.

Alternatively friction coefficient increasing treatment means includes roughenings, polygonal surfaces, splines, knurls, spikes, grooves, slots, protruding points, scoring or other such projections. Other options include pressed fit projections, concentric or spiral rings, radial riffs or teeth, waffle patterns, etc. Any operation that will force the outer surface areas to have more aggressive interaction with the flange surface such as selectively knurling, sanding, blasting, milling, machining, forging, casting, forming, shaping, roughing, stamping, engraving, punching bending or even just relieving internal areas is sufficient. Note that combinations of such friction coefficient increasing treatment means may be utilized. If the washer 1 - outer reaction socket 17 engagement is slightly larger than the nut 36 - inner drive socket 16 engagement, friction coefficient increasing treatment means either: may not be needed; may be positioned anywhere about the washer bottom surface; or may be positioned substantially beyond an effective friction radius of the nut or the bolt head about the washer bottom surface. To attain the inventive properties it is, sufficient that the washer bottom side be even. The opposing frictional surface, however, may also be tapered outwardly, whereby the outer edge of the frictional ring is thicker than the inner edge. However, if required, the washer and therefore its bottom side can also have a curvature. Particularly good results are obtained with a convex curve towards the joint. This is disclosed in U.S. Patent No. 7,462,007, having Issue Date of 9 December 2008, entitled "Reactive Biasing Fasteners". Note, however, that washers of the current invention impart no axial biasing force to the elongated bolt.

Generally reaction washers of the present invention for industrial bolting include: an external shape that allows rotational coupling with a torque application device; and an underside bearing friction surface area that is discontinuous and selectively biased in areas outward from the center bore. These surface friction features are selectively created on the washer's underside and excluding any portion of area near the radius of the center bore. These surface friction features may be created through knurling, sanding, blasting, milling, machining, forging, casting, forming, shaping, roughing, stamping, engraving, punching or bending. Surface friction features may be created by merely relieving material near the reaction washer bore. Surface friction features also may be either: created with discontinuous surfaces and/or textures featured in an area or areas outward from the bore; and/or positioned singularly, randomly or in any array arrangement.

**Alternative Z® Washer Geometries.** FIGs. 8A through 8L show alternative shapes for washer 1. Washers of the present invention may have an outer edge (and corresponding engaging means) shaped with any suitable geometry to non-rotatably engage with the outer socket inner edge (and its corresponding engaging means) shaped with a corresponding suitable or substantially identical geometry. Z® Washer 1's standard commercial shape is a "flower pattern" washer including concave portions extending inwardly and convex portions extending outwardly which are alternately and repeatedly provided in a radial direction around an imaginary reference circle that is centered at a central point of the washer. FIGs. 8B, 8E, 8G, 8H and 8I are clear derivations of such flower shaped washers. Note that FIG. 8K shows a multi-sided shape engagement and FIG. 8J shows spline engagement, both of which may be considered flower shaped with increasing numbers of engagement teeth.

Other suitable geometries include shapes such as triangle, curvilinear triangle, square, rectangle, parallelogram, rhombus, trapezoid, trapezium, kite, pentagon, hexagon, heptagon, octagon, nonagon, decagon, circle with outer projections, ellipse or oval. Note that outside edges of any suitable shape may be curved, rather than angular, to facilitate easy engagement with $Z^S$ockets of the present invention.

FIGs. 8D1, 8D2 and 8D3 show the embodiment of FIG. 8D, Z® Washer $1_{8D}$ for use with various power tools. Perspective views of the top and bottom faces and a side, cross-sectional view of washer $1_{8D}$, respectively, are shown. Generally washer $1_{8D}$ has an annular hexagonal shape having similar dimensions and characteristics as shown in FIGs. 1A, 1B and 1C, except with an "8D" subscript. Washer $1_{8D}$'s hexagonal shape includes radially extending side corners $6_{8A}$ which forms a hex-like shape. Generally a top bearing face $2_{8D}$ is smooth with lower surface friction and a bottom bearing face $3_{8D}$ has frictional enhancements, or bottom corners, $7_{8D}$ with higher surface friction. Note that lubricants may be used on top bearing face $2_{8D}$ to lower surface friction between it and threaded nut 36, or any other such threaded fastener. Radial bottom corners $7_{8D}$ increase the surface friction of bottom bearing face $3_{8D}$. Side corners $6_{8D}$ while not shown, may include angled bevel faces $8_{8D}$ formed between top bearing face $2_{8D}$ and a side bearing face $4_{8D}$. Such bevel faces $8_{8D}$ may make up outer edge portion which includes tapered surfaces and engaging teeth, the tapered surfaces being gradually inclined outwardly and toward bottom bearing face $3_{8D}$ and side bearing face $4_{8D}$.

Washer $1_{8D}$ has, inter alia, annular radius $R_{8A}$, a lobe radius $R_{8L}$, a knurl radius $R_{8K}$ and a void radius $R_{8V}$. Washer $1_{8D}$ has a height $H_8$, a first bevel height $H_{8Bi}$, a second bevel height $H_{8Bii}$, a knurl height $H_{8K}$ and a bevel angle $°_8$. Such bevel faces $8_{8A}$ may assist washer $1_{8A}$ in clearing a corner radius of a flange and other clearance issues. Further bevel faces 8 assist the outer reaction socket in engaging and rotatably coupling with washer 1. Bevel faces 8 may also accept modifications to outer reaction socket 17 to allow for inverted bolting applications.

Alternative Placement of **Z®** Washer Friction Coefficient Increasing Treatment Means. FIGs. 8D4 - 8D10 show washer $1_{8D}$ with various iterations of frictionally biased faces with relatively higher friction against the flange surface and relatively lower friction against the nut. In other words, washer $1_{8D}$ is shown with various types, sizes and locations of friction coefficient increasing treatment means. Note that these variations are shown with washer $1_{8D}$ but apply to all reaction washers disclosed in the present invention. FIG. 8D4 is shown with no frictional enhancements, just a smooth bottom side. FIG. 8D5 is shown with frictional enhancements which are formed recessed within the washer's bottom face by removing material proximate to the central bore. FIG. 8D6 shows a relatively thin band of frictional enhancements formed at an outer edge portion of the bottom face. FIG. 8D7 shows a relatively thick band of frictional enhancements formed equidistant from an inner edge and outer edge portion of the bottom face. FIG. 8D8 shows a relatively thin band having width of 1X of frictional enhancements formed a distance 1X from outer edge and 2X from inner edge of the bottom face. FIG. 8D9 shows friction enhancement means, in this case a downwardly sloping ring having sharp edges formed at outer edge of the bottom face. Washer $1_{8D5}$, while shown curved, imparts no axial biasing force to the elongated bolt. Alternatively Washer $1_{8D5}$ may have no variations in height except at the sharp edges.

As shown in FIG. 8D10, washers of one embodiment may also be provided with configurations for positive locking engagement with the outer reaction socket. Such positive locking engagements are indentions formed in the outer edge of washer $1_{8D}$. The outer reaction socket would include corresponding engagement means to allow for hands-free operation, and once the nut is seated, hands-free operation on an inverted bolting application.

Disclosures of reaction-style washers for industrial bolting having friction surfaces of the prior art discuss neither the importance of location nor the extent of coverage of such friction surfaces. Applicant discovered that friction coefficient increasing treatment means located at either inner washer radii near the bolt or about the entire underside of the washer tends towards washer movement, or rotation with the nut. These strategies were marginally successful occasionally yielding still washers. In other words, more friction treatments over larger, entire and/or interior portions of the underside of washers are substantially less effective than friction treatments over smaller and/or exterior portions.

**Alternative Fastener and Z® Socket Types for Use with Z® Washer.** FIG. 9A shows washer $1_{8D}$ for use with a bolt having a bolt head 20A threaded in a blind hole and HYTORC® dual drive coaxial action and reaction socket assembly 15. FIG. 9B shows washer $1_{8D}$ for use with a socket head cap screw 20B threaded in a blind hole and a modified HYTORC® dual drive coaxial action and reaction socket assembly 15C. Various fastener geometries may be used with tools, parts and accessories of the Z® System with corresponding design changes, such as shown in FIG. 9B. Modified socket assembly 15C includes a male fastener drive engagement means 16C rather than action socket 16.

**Reduced Z® Washer Surface Area.** FIG. 10 is similar to FIG. 5D except that an outer edge $4_{10A}$ of a pressurized washer $1_{10A}$" curtails from outer edge 37 of tightened nut 36". Notably reaction torque force $92_{10A}$ acting in another direction 94 received by washer outer edge $4_{10A}$ may be less than action torque force 91 acting in one direction 93 received by nut 36. Pressurized washer $1_{10A}$" absorbs reaction torque force $92_{10A}$ of tool 10B such that tool 10B applies action torque 91 to seated nut 36' and may apply less reaction force $92_{10A}$ to washer outer edge $4_{10A}$. Aggressive friction enhancements $7_{10A}$ are necessary to prevent washer $1_{10A}$ from turning with nut 36. Seated nut 36' turns but compressed washer $1_{10A}$' stands still. This relative positioning, namely, that friction enhancement $7_{10A}$ and therefore an effective friction radius of washer $1_{10A}$ is farther from the center of rotation, or turning force axis $A_{10}$, than an effective friction radius of nut 36, is one innovative aspect of the present invention. Reaction force $92_{10A}$ acts through outer socket 17A a distance $R_{10A}$ or so away from turning force axis $A_{10}$ which tends to hold washer $1_{10A}$ still. As a result of the differential in effective friction radii, washer $1_{10A}$ remains stationary on joint 30 rather than rotate with nut 36 as fastener 20 is tightened or loosened. Note that bottom face 54 of inner socket 16 rotates on and/or over an upper face 64A of a lower inner edge 65A of outer socket 17A. In this case inner socket 16 and outer socket 17A may experience additional facial friction due to a larger surface area of upper face 64A.

In other words washers having outer edges which either co-terminate with or curtail from an outer edge of the nut or the bolt head can be used with the HYTORC® Z® System. In such cases it is necessary for the bottom surface of the washer to be formed with aggressive friction coefficient increasing treatment means to ensure that the effective friction radius of the washer is greater than an effective friction radius of the nut or the bolt head. Successful outcomes are likely with aggressive friction enhancements even if the reaction force received by the washer outer edge is substantially equal to or less than the action torque received by a nut or a bolt head outer edge. In these situations such aggressive friction enhancements may include roughenings, polygonal surfaces, splines, knurls, spikes, grooves, slots, protruding points, or other such projections. Offsetting the aggressive friction coefficient increasing treatment means beyond $R_{20}$ remains an important feature in this case. Note that modified outer socket 17A requires a sophisticated design to engage and rotatably couple with washer 1. Note also that modified outer socket 17A may allow for inverted bolting applications.

**Alternative Z® Socket Sizes.** FIGs. 11A, 11B and 11C show various reaction socket sizes, including outer socket $17_{11A}$ having straight walls and outer sockets $17_{11B}$ and $17_{11C}$ having tapered walls. These variations allow for threaded fasteners and HYTORC® Z® Washers of different sizes to be used with the same Z® Gun. Other configurations may be used as needed.

**Z® System Applied to HYTORC® Torque Tools.** HYTORC® has developed spline adapters and reaction plates for adapting the Z® System to its array of electrically, hydraulically and pneumatically operated torque power tool models for regular clearance, low clearance and offset link bolting applications. FIG. 12A shows socket coupling means, or spline adapters, 18 and 18A, as discussed with respect to FIGs. 5A, 5B, 5C and 5D. Spline adapter 18A is designed for use with HYTORC® pneumatic and electric torque guns, such as Z® Gun 10A (and 10B), as shown again in FIG. 12B. It is shaped as an annular ring having splined engagements on its inner and outer sides. Inner drive socket 16 and outer reaction socket 17 of dual drive socket 15 are cooperatively coupled together and relatively rotatable in opposite directions in LSHT mode through the tool housing and/or other known and/or proprietary means via socket coupling means 18A.

As shown in FIG. 12C, spline adapter 18 is designed for use with Applicant's hydraulic torque tools, such as the HYTORC® ICE® 10C and the HYTORC® AVANTI® 10D and other such tools. It is shaped as a stepped annular ring with an upper portion and a lower portion fused together having different radius. The upper ring has a shorter radius and interior splined engagements to nonrotatably engage with splined reaction support portions 19A and 19B of tools 10C and 10D. The lower ring has a longer radius and exterior splined engagements to nonrotatably engage with splined portions on outer reaction socket 16. Inner drive socket 16 and outer reaction socket 17 of dual drive socket 15A are cooperatively coupled together and relatively rotatable in opposite directions through the tool housings and/or other known and/or proprietary means via socket coupling means 18.

FIGs. 13A and 13B show a Z® Reaction Pad 17B for use with the HYTORC® STEALTH® 10E designed mainly for low clearance bolting applications. Reaction pad 17B is shaped to fit the dimensions of STEALTH® 10E and non-rotatably attaches to the tool housing via pins or screws. Z® Reaction Pad 17B non-rotatably engages with Z® Washer 1.

**Z® System Applied to HYTORC® Offset Link.** Z® System benefits are achievable with proprietary dual drive interchangeable offset links, such as, for example, apparatus 80. Link 80 is powered by HYTORC®'s proprietary coaxial action and reaction torque tools, such as, for example, HYTORC® ICE® 10C hydraulic torque tool or the HYTORC® Z® Gun 10B (or 10A) pneumatic torque multiplier. Other such tools include HYTORC®'s proprietary jGUN® Single Speed, jGUN® Dual Speed Plus, AVANTI® 10D and/or STEALTH® 10E. Such proprietary dual drive interchangeable offset links are disclosed thoroughly in the following commonly owned and co-pending patent applications: Patent Cooperation Treaty Application Serial No. PCT/US2014/035375, having Filing Date of 24 April 2014, entitled "APPARATUS FOR TIGHTENING THREADED FASTENERS"; and U.S. Application Serial No. 61/940,919, having Filing Date of 18 February 2014, entitled "APPARATUS FOR TIGHTENING THREADED FASTENERS".

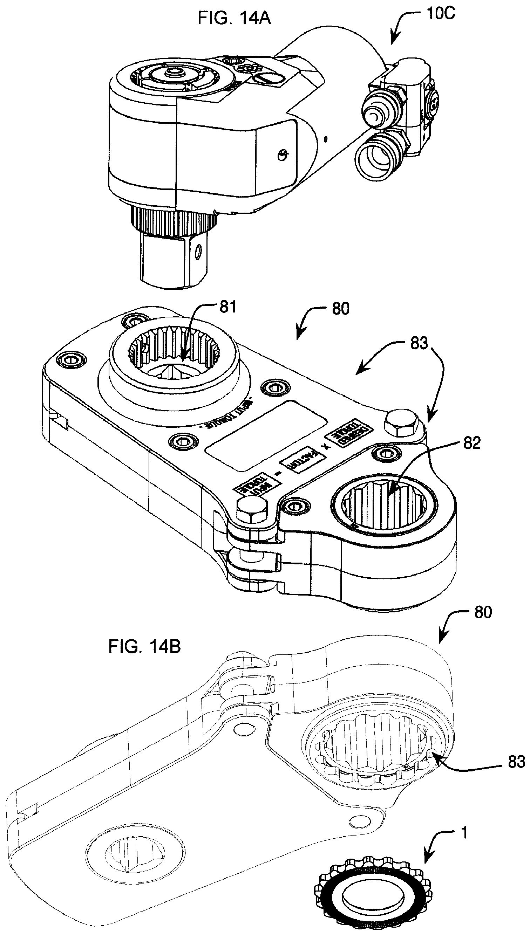

FIGs. 14A and 14B show top and a bottom perspective views of offset drive link assembly 80, for transmission and multiplication of torque from HYTORC® ICE® 10C for tightening or loosening a threaded fastener (not shown) over Z® Washer 1. Link 80 includes: a drive force input assembly 81; a drive force output assembly 82; and a reaction force assembly 83.

Generally during a tightening operation, a bottom knurled face of Z® Washer 1 rests on a joint to be closed while a bottom face of a nut or bolt head to be tightened rests on a top smooth face of Z® Washer 1. Outer edges of Z® Washer 1 nonrotatably engage with and react in a recess of an outer reaction socket of reaction force assembly 83. Meanwhile an inner socket of drive force output assembly 82 tightens the nut or bolt head over Z® Washer 1.

Advantageously the offset drive link assembly: allows access to previously unreachable fasteners due to, for example protruding threads, limited clearances and obstructions; makes practical previously unusable devices driven either electrically, hydraulically, manually and/or pneumatically; makes feasible previously unusable advanced materials, such as, for example aircraft-grade aluminum; creates modular components, such as, for example hex-reducing and -increasing drive bushings, male to female drive adaptors, to meet bolting application characteristics; yields accurate and customizeable torque multiplication; tames drive force and reaction force application; overcomes corrosion, thread and facial deformation; avoids bolt thread galling; nullifies side load; ensures balanced bolt load for symmetrical joint compression; simplifies link and tool use; minimizes risk of operator error; and maximizes bolting safety.

**The HYTORC® Z® System Used with a HYTORC® Dual Faced Friction Washer.** Per FIGs. 15A - 15G, it may be necessary to keep the back nut or bolt head from turning depending on relative friction conditions in play during use of the HYTORC® Z® System. If necessary the operator inserts a HYTORC® proprietary dual faced friction washer 85 under the back nut or bolt head 22. Its two friction enhanced faces 86 and 87 keep bolt head 22 from turning, especially as soon as load begins to be applied to bolt 24. Generally friction discussions related to Z® Washer 1 apply to friction enhanced faces 86 and 87. Similar benefits are achieved, as in lower bearing face 3 of Z® Washer 1, by strategic placement of the friction enhancements on faces 86 and 87.

In other words, a HYTORC® proprietary washer system, or dual counter-torque washer system, includes a first washer having external reaction force engagement means and one friction face for use under a nut or bolt head to be tightened or loosened (such as Z® Washer 1), and a second washer having two friction faces for use under a nut or bolt head on the other side of the joint (such as dual faced friction washer 85). This dual counter-torque washer system stops the stud or bolt from turning along, so as to control the thread and facial friction of the fastener to achieve a better translation from torque to bolt load. Note that any friction coefficient increasing treatments discussed with respect to the HYTORC® Z® Washer is applicable to HYTORC® Dual Faced Friction Washer 85.

Note that this dual counter-torque washer system may be used with any portion, any combination or all of the HYTORC® Z® System. Recall that torque has unknown friction and tension has unknown bolt relaxation. This washer system may come in a set to eliminate uncontrollable facial friction and uncontrollable side load to improve the bolt load accuracy of torque and tension.

**The HYTORC® Z® Gun (In Detail).** Referring to FIGs. 16A and 16B by way of example, these show perspective views of tools 10A and 10B, originally shown in FIGs. 3A-3C as the HYTORC Z® Gun. Tools 10A and 10B include: drive input and output assembly 100; turning force multiplication assembly 200; vibration force assembly 300; mode shifting assembly 400; and dual drive output and reaction socket assembly 15, or the HYTORC® Z® Socket.

Referring to FIG. 17A by way of example, this shows a side, cross-sectional view of tool 10A in LSHT mode. Referring to FIG. 17B by way of example, this shows a side, cross-sectional view of tool 10B in HSLT mode.

FIGs. 17A and 17B show drive input and output assembly 100 of tools 10A and 10B. Drive input components include drive tool housing 101 containing a drive generating mechanism 102, handle assembly 103, and a switching mechanism 104. Drive generating mechanism 102 generates torque turning force 91 in one direction 93 to turn nut 36 and is shown formed as a motor drive means which may include either a hydraulic, pneumatic, electric or manual motor. Drive tool housing 101 is shown generally as a cylindrical body with handle assembly 103 which is held by an operator. Handle assembly 103 includes a switching mechanism 104 for switching drive generating mechanism 102 between an inoperative position and an operative position, and vice-versa. A turning force input shaft 121 connects drive input components of drive input and output assembly 100 with turning force multiplication assembly 200 and vibration force assembly 300 and transfers turning force 91 between the same. A turning force output shaft 122 includes a driving part 123, which can be formed for example as a square drive. Turning force output shaft 122 connects drive output components of drive input and output assembly 100 with turning force multiplication assembly 200 and vibration force assembly 300 and transfers a multiplied or vibrated form of turning force 91 between the same and dual drive output and reaction socket assembly 15. In one mode of operation, a reaction force spline adaptor 443 receives torque reaction force 92 in the opposite direction 94. FIG. 18 is a side, cross-sectional view of turning force multiplication assembly 200 and vibration force assembly 300 of tool 10A in LSHT mode. FIG. 18 also shows portions of drive input and output assembly 100. Components not otherwise shown in other FIGs. include turning force output shaft bearing 191. Figure 19 is a is a perspective, cross-sectional view of drive tool housing assembly 101, drive tool handle assembly 103 and related internal components of tool 10A and tool 10B. FIG. 19 shows portions of drive input and output assembly 100. Components shown include: a handle rear cover 131; a gasket 137 adjacent rear cover 131 and the back of housing 101; motor assembly 102; an air valve assembly 132 having an outer air valve 133 and an inner air valve 134 held in place by a dowel pin 135. Rear cover 131 attaches to the back of and holds in such components in housing 101 by BHCS torque screws 136. A trigger assembly 150 includes: switching mechanism 104; springs 151; a trigger shaft bushing 152; and a trigger rod 153. Handle 103 includes: a control valve assembly 155 with a control valve 157 and a dowel pin 156; a conical spring 161; a regulator valve spacer 162; o-rings 163, one formed between control valve assembly 155 and an internal regulator housing 164 and one formed between internal regulator housing 164 and bottom plate 173. A mesh screen 171 is formed between bottom plate 173 and a noise filter 172. A socket head cap screw 174 connects such components and bottom plate 173 having a gasket 176 to handle assembly 103. An air fitting 175 extrudes from bottom plate 173 and connects to internal regulator housing 164. A handle push-button assembly 180 (not shown) allows an operator to change turning force direction and includes: a push button handle insert 181; a push button rack 182; a spring 183; and connectors 184.

Turning force multiplication assembly 200 includes a turning force multiplication mechanism 210 in a turning force multiplication mechanism housing 201 substantially for LSHT mode including a plurality of turning force multiplication transmitter assemblies. In the embodiments shown in FIGs. 17A and 17B, turning force multiplication assembly 200 includes five (5) multiplication transmitter assemblies 211, 212, 213, 214 and 215. It is to be understood that there are numerous known types of force multiplication mechanisms. Generally turning force multiplication transmitter assemblies 211 - 215 make up turning force multiplication mechanism 210, a compound epicyclic gearing system. It may include a plurality of outer planetary gears revolving about a central sun gear. The planetary gears may be mounted on movable carriers which themselves may rotate relative to the sun gear. Such compound epicyclic gearing systems may include outer ring gears which mesh with the planetary gears. Simple epicyclic gearing systems have one sun, one ring, one carrier, and one planetary set. Compound planetary gearing systems may include meshed-planetary structures, stepped-planet structures, and/or multi-stage planetary structures. Compared to simple epicyclic gearing systems, compound epicyclic gearing systems have the advantages of larger reduction ratio, higher torque-to-weight ratio, and more flexible configurations.

Turning force multiplication transmitter assemblies 211-215 may include: gear cages; planetary gears; ring gears; sun gears; wobble gears; cycloidal gears; epicyclic gears; connectors; spacers; shifting rings; retaining rings; bushings; bearings; caps; transmission gears; transmission shafts; positioning pins; drive wheels; springs; or any combination or portion thereof. Turning force multiplication transmitters such as 211 - 215 may include other known like components as well. Note that turning force input shaft 121 also may be considered a turning force multiplication transmitter; specifically it's a first stage motor sun gear of turning force multiplication transmitter 211. Turning force multiplication assemblies are well known and disclosed and described. An example is disclosed and described in Applicant's U.S. Patent No. 7,950,309.

FIG. 18 shows more detail of portions of turning force multiplication assembly 200 than FIGs. 17A and 17B. Components turning force multiplication assembly 200 shown in FIG. 18 and not in FIGs. 17A and 17B include: a lock nut 250; a lock washer 249; a bearing 241; a housing adapter 247; a bearing spacer 252; an internal retaining ring 243; a bearing 242; a gearbox connector 248; a top and a bottom internal retaining ring 251; a top and bottom ball bearing 246; a double sealed bearing 244; and an internal retaining ring 245.

Vibration force assembly 300 includes a vibration force mechanism 310 in a vibration force mechanism housing 301 substantially for HSLT mode including either one or a plurality of vibration transmitters. In the embodiment shown in FIGs. 17A and 17B, vibration force assembly 300 includes two vibration, specifically impaction, transmitters 311 and 312. It is to be understood that there are various known vibration force mechanisms, and often involve impaction force mechanisms consisting of an anvil and a turning hammer. The hammer is turned by the motor and the anvil has a turning resistance. Each impact imparts a hammering force, which is passed on to the output drive.

Generally vibration force assemblies may include vibration force mechanisms such as ultrasonic force mechanisms including an ultrasonic force transmitters; mass imbalance force mechanisms including mass imbalance force transmitters, or any other time-varying disturbance (load, displacement or velocity) mechanisms including a time-varying disturbance (load, displacement or velocity) force transmitters. Further vibration force assemblies may include: hammers; anvils; connectors; spacers; shifting rings retaining rings; bushings; bearings; caps; transmission gears; transmission shafts; positioning pins; drive wheels; springs; or any combination thereof. Vibration transmitters such as 311 and 312 may include other known like components as well. FIG. 18 also shows a dowel pin 320.

Generally the RPMs of tools 10A and 10B decrease as torque output increases. The activation or deactivation of vibration force mechanism 310 alternatively may be such that when the RPMs drop below or go beyond a predetermined number, vibration force mechanism 310 becomes ineffective or effective. In the HSLT mode vibration force mechanism 310 provides a turning force to the nut. In LSHT mode vibration force mechanism 310 acts as an extension to pass on the turning force from one part of the tool to another. Note that vibration force mechanism 310 can be located either close to the tool motor, close to the tool output drive or anywhere in between.

In HSLT mode, vibration force mechanism 310 always receives a turning force and turns; the housing may or may not receive a turning force; and the torque output is relatively low, which is why the housing does not need to react. Note that in the embodiments of FIG. 17A and 17B, vibration force mechanism 310 is operable only in a higher speed mode, such as HSLT mode. This in turn means that at a lower speed when the torque intensifier mechanism is operable, such as LSHT mode, there is no impact and/or minimal vibration. During HSLT mode, at least two multiplication transmitters are unitary and rotate with the hammer to increase inertia and assist in the hammering motion from the impaction mechanism. Note that when a fastener exhibits little or no corrosion, thread and facial deformation and/or thread galling, vibration force mechanism 310 may not be necessary in HSLT mode.

Slide action mode shifting assembly 400 is substantially for shifting tool 10A from LSHT mode to HSLT mode and tool 10B from HSLT mode to LSHT mode. In the embodiments shown in FIGs. 17A and 17B, slide action mode-shifting assembly 400 includes: a shifter base 401; a shifter collar 442; a spline shifter swivel 443; a shifter spline ring 445; an external shifting ring 456; and an internal shifting assembly 450. Internal shifting assembly 450, as shown in FIGs. 17A and 17B includes: an internal shifting bushing 452; an internal shifting ring 453; and coupling ball bearings 454.

Slide action mode-shifting assembly 400 may include: manual assemblies (sequential manual, non-synchronous or preselector) or automatic assemblies (manumatic, semi-automatic, electrohydraulic, saxomat, dual clutch or continuously variable); torque converters; pumps; planetary gears; clutches; bands; valves; connectors; spacers; shifting rings retaining rings; bushings; bearings; collars; locking balls; caps; transmission gears; transmission shafts; synchronizers; positioning pins; drive wheels; springs; or any combination or portion thereof. Mode shifting components may include other known like components as well. It is to be understood that there are various known mode-shifting assemblies, and often involve shifting components consisting of collars, rings and locking balls.

FIG. 18 shows more detail of portions of slide action mode shifting assembly 400 than FIGs. 17A or 17B. Additional components of shifting assembly 400 shown in FIG. 18 and not shown in FIGs. 17A and 17B include: internal retaining rings 451, 457 and 459; a bottom and a top bushing 446 and 447; and shifter ring reaction plugs 458. Figure 20 is a perspective view of mode shifting assembly 400 of tool 10A and tool 10B. FIG. 20 shows substantial external portions of mode-shifting assembly 400. Components not otherwise shown in other FIGs. include: a lock shaft cap 402; a handle insert 403; a handle grip 404; a pull handle 405; an actuator link and shifter pin 406; a pivot pin 407; a shifter extension bracket 410; SHCS 411; a shifter fastener assembly 430; a bottom and a top shifter link 441; a wave spring 448; and a holder spline 449.

Referring back to FIGs. 5A - 5D, they show perspective and cross-sectional view of dual drive output and reaction socket assembly 15 of tool 10A and tool 10B and dual drive output and reaction socket assembly 15A of tool 10C and tool 10D.

In LSHT mode, dual drive output and reaction socket assembly 15 is substantially for transferring a multiplied form of turning force 91 to nut 36 in one direction 93 and the corresponding multiplied form of reaction force 92 in another direction 94 to Z® Washer 1, which acts as a stationary object. In HSLT mode, dual drive output and reaction socket assembly 15 is substantially for transferring a vibrated form of turning force 91 to either nut 36 or nut 36 and washer 1 in one direction 93. In the embodiment shown in FIGs. 17A and 17B, dual drive output and reaction socket assembly 15 includes an inner drive socket 16 and an outer reaction socket 17. Outer reaction socket 17 is non-rotatably engageable with reaction force spline shifter swivel 443 during the LSHT mode. It is to be understood that there are various known engagement mechanisms to transfer turning and reaction forces to threaded fasteners and nuts and washers thereof, including castellation, spline and other geometries.

Tool 10A operates per the following in LSHT mode. The operator pulls shifter base 401 toward a rear position. Coupling/locking ball bearings 454 disengage from turning force multiplication mechanism housing 201 and engage with shifter spline ring 445 inside reaction force spline shifter swivel 443. Shifter base 401 is linked with turning force multiplication mechanism housing 201. Turning force multiplication transmitters 211 - 215 are unlocked and free to rotate relative to each other. The operator's pulling of shifter base 401 toward a rear position also engages shifting assembly vibration (impaction) force spline ring 453 with vibration (impaction) force mechanism housing 301. This locks up vibration (impaction) force transmitters 311 and 312 and thus vibration (impaction) force assembly 300. And this allows turning force output drive shaft 120 to be driven by the fifth gear cage of turning force multiplication transmitter 215, which is spline engaged with vibration (impaction) force mechanism housing 301. Spline shifter swivel 443 is spline engaged with reaction socket 17. And reaction socket 17 is geometrically engaged with washer 1 under nut 36. Upon seating of nut 36, compressed locking disc washer 1 serves as the stationary object by which turning force multiplication mechanism housing 201 reacts off of reaction socket 17. With turning force multiplication mechanism housing 201 held still, turning force multiplication transmitters 211 - 215 tighten seated nut 36 via turning force output drive shaft 120.

Generally operation of tool 10B requires activation or deactivation of impaction mechanism 310. Slide action mode shifting assembly 400 can shift tool 10A between either: multiplication mechanism 210; impaction mechanism 310; part of multiplication mechanism 210 (such as for example one of the plurality of multiplication transmitters); part of impaction mechanism 310 (such as for example one of the plurality of impaction transmitters); or any combination thereof.

Tool 10B operates per the following in HSLT mode. The operator pushes shifter base 401 toward a forward position Coupling/locking ball bearings 454 engage with turning force multiplication mechanism housing 201 and vibration (impaction) force mechanism housing 301. Shifter spline ring 445 disengages from inside reaction force spline shifter swivel 443, thereby rendering it idle and inactive. Therefore reaction socket 17 is idle and inactive because it is not spline engaged with turning force multiplication mechanism housing 201. With coupling/locking ball bearings 454 engaged with vibration (impaction) force mechanism housing 301, turning force multiplication transmitters 211 - 215 are locked up and unable to rotate relative to each other. Thus turning force multiplication assembly 200 turns as a unitary mass via turning force input shaft 121. Motor 102 turns turning force input shaft 121 which includes the first stage sun motor gear of turning force multiplication transmitter 211. The operator's pushing of shifter base 401 toward a forward position also disengages shifting assembly vibration (impaction) force spline ring 453 from vibration (impaction) force mechanism housing 301. This unlocks vibration (impaction) force transmitters 311 and 312 and thus vibration (impaction) force assembly 300. Vibration (impaction) force mechanism housing 301 is spline engaged with the fifth gear cage of turning force multiplication transmitter 215. Vibration (impaction) force transmitter 312 (anvil), is spline engaged to turning force output drive shaft 120, which runs up or down nut 36 on stud 23 by impact of vibration (impaction) force transmitter 311 (hammer).

Referring back to FIGs. 3A-3C and FIGs. 4A-4B, generally and from the perspective of nut 36, tool 10A either tightens, loosens or tightens and loosens nut 36 in LSHT mode. And tool 10B either runs up, runs down or runs up and runs down nut 36 in HSLT mode. Generally and from the perspective of washer 1, tool 10A, in LSHT mode, either: pressurizes washer 1" between tightened nut 36" on loaded stud 23" and tightened joint 30" to the pre-determined tightening torque; and/or compresses washer 1' between seated nut 36' on pre-loosened stud 23' on pre-loosened joint 30' from the pre-determined tightening torque. Generally and from the perspective of washer 1, tool 10B in HSLT mode, either: compresses washer 1' between seated nut 21' on pre-loaded stud 23' on pre-tightened joint 30' to the pre-determined pre-tightening torque; decompresses washer 1 between nut 36 on stud 23 on loosened joint 30 from the pre-determined pre-tightening torque; or vibrates pressurized washer 1" between tightened nut 21" on loaded stud 23" on tightened joint 30" to adequately pulverize bolt thread corrosion. Note that reference numerals with ' and " represent similar force magnitudes.

During HSLT mode tool 10B either: runs down either nut 36 or both nut 36 and washer 1 on stud 23 with turning force 91 in one direction 93 to seat nut 36' and compress washer 1' on pre-loaded stud 23' on pre-tightened joint 30' to a pre-determined pre-tightening torque; runs up either seated nut 36' or both seated nut 36' and compressed washer 1' on pre-loosened stud 23' on pre-loosened joint 30' with turning force 92 in an opposite direction 94 from a pre-determined pre-loosening torque; or vibrates (impacts) tightened nut 36" over pressurized washer 1" to apply vibration to adequately pulverize thread corrosion. During LSHT mode tool 10A either: tightens seated nut 36' on compressed washer 1' on pre-loaded bolt 23' on pre-tightened joint 30' with turning force 91 in one direction 93 to the pre-determined tightening torque and applies reaction force 92 in opposite direction 93 to compressed washer 1'; or loosens tightened nut 36" over pressurized washer 1" on loaded stud 23" on tightened joint 30" with turning force 92 in opposite direction 94 from a pre-determined tightening torque and applies reaction force 91 in one direction 93 to pressurized washer 1". Note that reference numerals with ' and '' represent similar force magnitudes.

During operation tool 10A switches from LSHT mode to tool 10B in HSLT mode upon unseating nut 36 and decompressing washer 1 at the pre-determined pre-loosening torque. During operation tool 10B switches from HSLT mode to tool 10A in LSHT mode upon either: seating nut 36 and decompressing washer 1 at the pre-determined pre-tightening torque; or adequate pulverization of thread corrosion. Note that the operator uses mode shifting assembly 400 to switch the tool from LSHT mode to the HSLT mode or visa versa, but such a switch may include other known like components as well. Note that mode shifting assembly 400 is a manual switch, but may be automatic. Similarly, note that activation or deactivation of vibration (impaction) force assembly 300 may occur either manually or automatically. Note that LSHT mode can be switched from torque regulated to vibration assisted or vice versa, and wherein HSLT mode can be switched from vibration regulated to torque assisted or vice versa. Note that vibration (impaction) force assembly 300 can continue operating even if washer 1 begins or ceases rotation. And note that LSHT mode may be vibration assisted for loosening nut 36 to help overcome chemical, heat and/or lubrication corrosion and avoid bolt thread galling.

Note that power tools for gall-reduced tightening and loosening of industrial fasteners in accordance with the present invention may also be characterized in that: turning force multiplication mechanism housing 201 is operatively connected with at least one turning force multiplication transmitter 211 - 215; during LSHT mode at least two of multiplication transmitters 211 - 215 rotate relative to the other; and during HSLT mode at least two of multiplication transmitters 211 - 215 are unitary to assist the hammering motion imparted by the turning force impaction mechanism 310. During HSLT mode, turning force output drive shaft 120 and the combination of the turning force multiplication assembly 200 including its housing turn as a unitary mass in the same direction. This creates inertia that enhances torque output of the impaction mechanism to overcome corrosion, thread and facial deformation and avoid bolt thread galling.

Methods are disclosed of gall-minimized tightening and loosening of two parts with one another with industrial fasteners 20 of the kind having nut 36, washer 1 and stud 23 with a power tool (10A and 10B) of the kind having: motor 102 to generate a turning force; a drive (122 and 123) to transfer turning force 91; turning force multiplication mechanism 210 in turning force multiplication mechanism housing 201 for LSHT mode including turning force multiplication transmitters 211 - 215; vibration force mechanism 310 for HSLT including vibration transmitter 311, 312; drive socket 16 operatively connected with nut 36; reaction socket 17: during LSHT mode, operatively connected to washer 1 to transfer reaction force 92 to washer 1; and during HSLT mode, either operatively connected to or operatively disconnected from washer 1. Such method including: wherein tightening includes: placing washer 1 on a free stud end 25; placing nut 36 over washer 1 on free stud end 25; running down, in HSLT mode, either nut 36 or nut 36 and washer 1 on free stud end 25 to a pre-determined pre-tightening torque to seat nut 36 and compress washer 1; switching from HSLT mode to LSHT mode; and torqueing tight, in LSHT mode, seated nut 36 to a pre-determined tightening torque and pressurizing washer 1 between tightened nut 36 and tightened joint 30; wherein loosening includes: placing tool 10A over tightened nut 36 and pressurized washer 1; torqueing loose, in LSHT mode, tightened nut 36 over pressurized washer 1 to a pre-determined loosening torque; switching from LSHT mode to HSLT mode; and running up, in HSLT mode, either seated nut 36 or seated nut 36 and compressed washer 1 on free stud end 25. The method of loosening further includes: vibrating, in HSLT mode, tightened nut 36 over pressurized washer 1 to apply vibration to pulverize bolt thread corrosion; and switching from HSLT mode to LSHT mode.

Tools 10A and 10B, above, and tools 10F, 10G, 10H and 101, below, are generally describable as power tools for gall-minimized tightening and loosening of an industrial threaded fastener of the kind having a coaxial reaction surface, a stud and either a nut threadedly engageable with the stud or a stud-head connected to the stud. Tools 10A, 10B, 10F, 10G, 10H and 10I include: a motor to generate a turning force; a drive to transfer the turning force; a turning force multiplication mechanism in a housing including a turning force multiplication transmitter for all torque modes from lower resistance to higher resistance; and at least one vibration force mechanism including a vibration transmitter for an intermittent force mode operatable during all torque modes from lower resistance to higher resistance.

Alternatively tools 10A and 10B, above, and tools 10F, 10G, 10H and 10I below, are describable as power tools for gall-minimized tightening and loosening of an industrial fastener of the kind having a nut, a washer and a stud, the tools including: a motor to generate a turning force; a drive to transfer the turning force; a turning force multiplication mechanism in a housing including a turning force multiplication transmitter for a continuous torque mode; a vibration force mechanism including a vibration transmitter for either: an intermittent torque mode; an intermittent force mode; or both the intermittent torque mode and the intermittent force mode.

Referring to FIG. 21A by way of example, this shows a cross-sectional view of an embodiment of the present application as tool 10F, a power tool for gall-minimized tightening, loosening or both tightening and loosening of an industrial threaded fastener 801 of the kind having a stud and a nut threadedly engageable with the stud. Tool 10F includes: a drive input and output assembly 810; a turning force multiplication assembly 820; a vibration force assembly 830; a mode shifting assembly 840; and a drive output socket and reaction arm assembly 850. Referring to FIG. 21B by way of example, this shows a cross-sectional view of an embodiment of the present application as tool 10G. Tools 10F and 10G are similar as noted by duplication of reference numbers. Tool 10G is a reaction arm-free power tool for gall-minimized tightening, loosening or both tightening and loosening of an industrial threaded fastener 802 of the kind having a coaxial reaction surface, such as, for example, HYTORC®Z®Washer 1, a stud and a nut threadedly engageable with the stud. Tool 10G includes: a drive input and output assembly 810; a turning force multiplication assembly 820; a vibration force assembly 830; a mode shifting assembly 840; and dual drive output and reaction socket assembly 855, which is similar to HYTORC®Z® Socket 15.

Tools 10F and 10G include a turning force multiplication mechanism with either one or a plurality of gear stages.

A vibration force mechanism includes: a turning force impaction mechanism having a hammer and an anvil; and an intermittent force mechanism 860 of either: an ultrasonic force mechanism including an ultrasonic force transmitter; a mass imbalance force mechanism including a mass imbalance force transmitter; or any other time-varying disturbance (load, displacement, turn or velocity) mechanism including a time-varying disturbance (load, displacement, turn or velocity) force transmitter. Tool 10F represents a modified HYTORC® THRILL® Gun including intermittent force mechanism 860. Tool 10G represents a modified HYTORC® Z® Gun including intermittent force mechanism 860.

Referring to FIG. 22A by way of example, this shows a cross-sectional view of an embodiment of the present application as tool 10H, a power tool for gall-minimized tightening, loosening or both tightening and loosening of an industrial threaded fastener 901 of the kind having a stud and a nut threadedly engageable with the stud. Tool 10H includes: a drive input and output assembly 910; a turning force multiplication assembly 920; a vibration force assembly 960; a mode shifting assembly 940; and a drive output socket and reaction arm assembly 950. Referring to FIG. 22B by way of example, this shows a cross-sectional view of an embodiment of the present application as tool 101. Tools 10H and 10I are similar as noted by duplication of reference numbers. Tool 10I is a reaction arm-free power tool for gall-minimized tightening, loosening or both tightening and loosening of an industrial threaded fastener 901 of the kind having a coaxial reaction surface, such as, for example, HYTORC®Z® Washer 1, a stud and a nut threadedly engageable with the stud. Tool 10I includes: a drive input and output assembly 910; a turning force multiplication assembly 920; a vibration force assembly 960; a mode shifting assembly 950; and dual drive output and reaction socket assembly 955, which is similar to HYTORC® Z® Socket 15.

Tools 10H and 10I include a turning force multiplication mechanism with either one or a plurality of gear stages. A vibration force mechanism 960 includes either: an ultrasonic force mechanism including an ultrasonic force transmitter; a mass imbalance force mechanism including a mass imbalance force transmitter; or any other time-varying disturbance (load, displacement, turn or velocity) mechanism including a time-varying disturbance (load, displacement, turn or velocity) force transmitter. Tool 10H represents a modified HYTORC® jGUN® Dual Speed Plus including intermittent force mechanism 960. Tool 10I represents a modified HYTORC® jGUN® Dual Speed Plus including intermittent force mechanism 960 and dual drive output and reaction socket assembly 955, which is similar to HYTORC® Z® Socket 15.

Further to tools 10A, 10B, 10G and 10I the drive socket is operatively connected with the nut. The reaction socket may be operatively connected to the housing and the coaxial reaction surface during the higher resistance torque mode to transfer a reaction force to the coaxial reaction surface. Alternatively the reaction socket may be either operatively connected to the housing and the coaxial reaction surface or operatively connected to the housing and operatively disconnected from the coaxial reaction surface during either the lower resistance torque mode or the intermittent force mode. The drive socket is shown as an inner socket and the reaction socket is shown as an outer socket.

The following discussion relates to tools 10A, 10B, 10F, 10G, 10H and 101. Note that for ease of description any reference to a "nut" or "fastener" includes the possibility of: a stud-head attached to a stud; a nut and a washer on and/or over a stud; a stud-head attached to stud and a washer over the stud. Note that any suitable fastener geometry may be used with the present application, such as, for example: an allen key connection; a socket shoulder screw ("SSC") head; a socket head button screw ("SHBS") head; a hex head cap screw ("HHCS") head; a round head slotted screw ("RHSS") head; a flat head torx screw ("FHTS") head; a socket set screw ("SSS") head; or a socket head cap screw "(SHCS") head.

These discussions describe the coaxial reaction surface as a washer. In some instances, however, the washer may be formed either integral with or bonded to a joint to be tightened or loosened. In other instances the coaxial reaction surface is a portion of the stud extending beyond the nut. In still other instances a coaxial reaction arm may abut against a viable and accessible stationary object for gall-minimized tightening and loosening.

Washer 1 is generally shown as a flower washer with a knurled bottom face to provide reaction torque. Per FIGs. 8A-8L, note the suitability of nearly any external shape which non-rotatably engages with reaction sockets, plates and links of the present invention. Also note the suitability of nearly any surface feature which increases facial friction. Examples of external shapes include: any suitable geometric shape like pentagon, hexagon, octagon, etc.; knurls; cutouts; pressed holes; castellations; etc. Examples of surface friction enhancement features include: patterns; finishes; treatments; coatings; platings; roughness; etc. Inventively even before seating of the nut and/or bolt head, the coaxial reaction surface becomes a viable and accessible coaxial stationary object in which to transfer reaction forces of the tools.

## Claims

1. A reaction washer (1) for receiving counter torque generated due to tightening or loosening of a threaded fastener (20, 801, 901), the washer (1) including:

   an outer edge (4) having a geometric shape that allows for rotational coupling with a power tool (10);
   a center bore (5);

a bottom surface (3), **characterised in that** the reaction washer has friction coefficient increasing treatment means (60) biased in areas outward from the center bore (5); and

a tapered bottom edge portion (8) formed between the outer edge (4) and the bottom surface (3) and extending inwardly relative to an outer edge of the threaded fastener and downwardly to the outer edge.

2. A reaction washer (1) according to claim 1 wherein the friction coefficient increasing treatment means (60) are selectively biased towards the outer edge (4).

3. A reaction washer (1) according to one of the claims 1 or 2 wherein the friction coefficient increasing treatment means (60) are discontinuously biased in areas towards the outer edge (4).

4. A reaction washer (1) according to one of the preceding claims wherein the friction coefficient increasing treatment means (60) are not located at or near the radius of the center bore (5).

5. A reaction washer (1) according to one of the preceding claims wherein the friction coefficient increasing treatment means (60) include either: roughenings; polygonal surfaces; splines; knurls; spikes; grooves; slots; protruding points or corners; other such projections; or any combination thereof.

6. A reaction washer (1) according to one of the preceding claims wherein the friction coefficient increasing treatment means (60) are formed either: singularly; randomly; in an array; or any combination thereof.

7. A reaction washer (1) according to claim 1 wherein the bottom surface (3) includes a smooth surface formed between the center bore (5) to accept the bolt and the friction coefficient increasing treatment means (60).

8. A threaded fastener (20, 801, 901) for fastening objects including:

   a stud (23);
   either a nut (36) to be tightened or loosened threadedly engageable with the stud (23) or a stud-head to be tightened or loosened connected to the stud (23); and
   the reaction washer (1) of either claim 1 - 7 disposed between one of the objects and either the nut (36) or the bolt head (20).

9. A threaded fastener according to claim 8, wherein an effective friction radius of the washer is greater than an effective friction radius of the threaded fastener.

10. A threaded fastener according to one of the claims 8 or 9, wherein the washer (1) outer edge (4) ex-tends substantially beyond an outer edge (4) of the threaded fastener (20, 801, 901).

11. A threaded fastener according to one of the claims 8 to 10, wherein the friction coefficient increasing treatment means (60) are positioned substantially beyond an effective friction radius of the nut (36) or the bolt head (20) about the bottom surface (3) of the washer (1).


**Patentansprüche**

1. Reaktionsscheibe (1) zur Aufnahme des durch das Anziehen oder Lösen eines Gewindebefestigungsmittels (20, 801, 901) erzeugten Gegendrehmoments, wobei die Reaktionsscheibe (1) aufweist:

   - eine Außenkante (4) mit einer geometrischen Form, die eine Drehkupplung mit einem angetriebenen Werkzeug (10) ermöglicht,
   - eine zentrale Bohrung (5);
   - eine Bodenfläche (3),
   **dadurch gekennzeichnet, dass** die Reaktionsscheibe (1)
   - Reibungskoeffizient-erhöhende Behandlungsmittel (60), die in Bereichen außerhalb der zentralen Bohrung (5) vorgespannt sind; und
   - einen sich verjüngenden Bodenkantenabschnitt (8) aufweist, der zwischen der Außenkante (4) und der Bodenfläche (3) ausgebildet ist und sich relativ zu einer Außenkante des Gewindebefestigungsmittels nach innen und nach unten bis zum äußeren Rand erstreckt.

**2.** Reaktionsscheibe (1) nach Anspruch 1, wobei die Reibungskoeffizient-erhöhenden Behandlungsmittel (60) selektiv zur Außenkante (4) vorgespannt sind.

**3.** Reaktionsscheibe (1) nach einem der Ansprüche 1 oder 2, wobei die Reibungskoeffizient-erhöhenden Behandlungsmittel (60) diskontinuierlich in Bereichen zur Außenkante (4) hin vorgespannt sind.

**4.** Reaktionsscheibe (1) nach einem der vorstehenden Ansprüche, wobei sich die Reibungskoeffizient-erhöhenden Behandlungsmittel (60) nicht am oder nahe am Radius der zentralen Bohrung (5) befinden.

**5.** Reaktionsscheibe (1) nach einem der vorstehenden Ansprüche, wobei die Reibungskoeffizient-erhöhenden Behandlungsmittel (60) entweder Aufrauhungen; polygonale Oberflächen; Verzahnungen; Rändelungen; Spitzen; Rillen; Schlitze;
vorstehende Punkte oder Ecken; andere derartige Vorsprünge oder jede Kombination davon umfassen.

**6.** Reaktionsscheibe (1) nach einem der vorstehenden Ansprüche, wobei die Reibungskoeffizient-erhöhenden Behandlungsmittel (60) entweder singulär; zufällig, in einem Array; oder in einer beliebigen Kombination davon ausgebildet sind.

**7.** Reaktionsscheibe (1) nach Anspruch 1, wobei die Bodenfläche (3) eine glatte Oberfläche umfasst, die zwischen der zentralen Bohrung (5) zur Aufnahme des Bolzens und den Reibungskoeffizient-erhöhenden Behandlungsmitteln (60) ausgebildet ist.

**8.** Gewindebefestigungsmittel (20, 801, 901) zum Befestigen von Objekten, umfassend:
einen Bolzen (23);

entweder eine Mutter (36), die zum Anziehen oder Lösen mit dem Bolzen (23) in Gewindeeingriff gebracht werden kann,
oder einen Bolzenkopf, der zum Anziehen oder Lösen mit dem Bolzen (23) verbunden ist, und die Reaktionsscheibe (1) nach einem der Ansprüche 1 bis 7, die zwischen einem der Gegenstände und entweder der Mutter (36) oder dem Schraubenkopf (20) angeordnet ist.

**9.** Gewindebefestigungsmittel nach Anspruch 8, wobei ein effektiver Reibungsradius der Reaktionsscheibe größer ist als ein effektiver Reibungsradius der Gewindebefestigungsmittel.

**10.** Gewindebefestigungsmittel nach einem der Ansprüche 8 oder 9, wobei sich die Außenkante (4) der Reaktionsscheibe (1) wesentlich über eine Außenkante des Gewindebefestigungsmittels (20,801,901) hinaus erstreckt.

**11.** Gewindebefestigungsmittel nach einem der Ansprüche 8 bis 10, wobei die Reibungskoeffizient-erhöhenden Behandlungsmittel (60) wesentlich über einen wirksamen Reibungsradius der Mutter (36) oder des Schraubenkopfes (20) hinaus um die Bodenfläche (3) der Reaktionsscheibe (1) positioniert sind.


**Revendications**

**1.** Rondelle de réaction (1) pour recevoir le contre-couple généré par le serrage ou le desserrage d'un élément de fixation fileté (20, 801, 901),
la rondelle (1) comprenant :

un bord extérieur (4) ayant une forme géométrique permettant le couplage en rotation avec un outil motorisé (10),
un perçage central (5),
une surface de dessous (3),
rondelle de réaction **caractérisée en ce qu'**elle comprend :

des moyens de traitement augmentant le coefficient de friction (60) s'étendant dans des zones à l'extérieur du perçage central (5), et
une partie de bord du dessous conique (8) formé entre le bord extérieur (4) et la surface de dessous (3) et s'étendant vers l'intérieur par rapport au bord extérieur de l'élément de serrage fileté et vers le bas vers le bord extérieur.

**2.** Rondelle de réaction (1) selon la revendication 1,
dans lequel
les moyens de traitement augmentant le coefficient de friction (60) est s'étend sélectivement vers le bord extérieur (4).

**3.** Rondelle (1) selon l'une des revendications 1 ou 2,
dans lequel
les moyens de traitement augmentant le coefficient de friction (60) sont prévus de façon discontinue dans des zones vers le bord extérieur (4).

**4.** Rondelle (1) selon l'une des revendications précédentes,
dans lequel
les moyens de traitement augmentant le coefficient de friction (60) ne sont pas situés sur ou à proximité du rayon du perçage central (5).

**5.** Rondelle (1) selon l'une quelconque des revendications précédentes, dans laquelle les moyens de traitement augmentant le coefficient de friction (60) comprennent :
des rugosités ; des surfaces polygonales, des cannelures, des moletages ; des pointes, des rainures, des fentes, des points en saillie ou des coins ou autres tels éléments en relief ou toute combinaison de ceux-ci.

**6.** Rondelle (1) selon l'une quelconque des revendications précédentes, dans laquelle les moyens de traitement augmentant le coefficient de friction (60) sont formés soit :
séparément, ou de manière aléatoire, ou en réseau, ou en n'importe quelle combinaison.

**7.** Rondelle (1) selon la revendication 1,
dans laquelle
la surface de dessous (3) comprend une surface lisse formée entre le perçage central (5) pour recevoir le boulon et les moyens augmentant le coefficient de friction (60).

**8.** Elément de fixation fileté (20, 801, 901) pour fixer des objets comprenant :

une tige (23), ou
soit un écrou (36) à serrer ou à desserrer par vissage avec la tige (23) ou une tête de vis à serrer ou à desserrer reliée à la tige (23), et
la rondelle de réaction (1) selon l'une des revendications 1-7 placée entre l'un des objets et l'écrou (36), ou la tête de vis (20).

**9.** Elément de fixation fileté selon la revendication 8,
dans lequel
le rayon de friction effectif de la rondelle est supérieur au rayon de friction effectif de l'élément de fixation fileté.

**10.** Elément de fixation fileté selon l'une des revendications 8 ou 9, dans lequel le bord extérieur (4) de la rondelle (1) s'étend pratiquement au-delà du bord extérieur (4) de l'élément de fixation filetée (20, 801, 901).

**11.** Elément de fixation fileté selon l'une des revendications 8 à 10, dans lequel les moyens de traitement augmentant le coefficient de friction (60) sont placés pratiquement au-delà du rayon de friction effectif de l'écrou (36) ou de la tête de vis (20) autour de la surface de dessous (3) de la rondelle (1).

FIG. 1A

$R_{1A}$

$R_{1L}$

$R_{1V}$

1

2

5

6   9

FIG. 1B

7

HYTORC

$R_{1K}$

3A

3

5

1

FIG. 1C

$H_1$

$H_{1Bii}$

2

4

$H_{1Bi}$

$\phi_1$

8   3

$H_{1K}$

FIG. 2A

FIG. 2B

FIG. 3A

100

200

300

10A

400

15

36
23
1

30

FIG. 3B

10A

23'

36'

30'

1'

FIG. 3C

10B

23"

1"

36"

30"

FIG. 4A

20"

36"

1"

30"

20"

FIG. 4B

36"

1"

30"

EP 3 083 146 B1

FIG. 5A

FIG. 5B

FIG. 5C

FIG. 5D

32

FIG. 6A

FIG. 6B

FIG. 6C

FIG. 6D

FIG. 6E

EP 3 083 146 B1

FIG. 7A

FIG. 7B

FIG. 7C

FIG. 8A

FIG. 8B

FIG. 8C

FIG. 8D

FIG. 8E

FIG. 8F

FIG. 8G

FIG. 8H

FIG. 8I

FIG. 8J

FIG. 8K

FIG. 8L

FIG. 8D1

FIG. 8D2

$1_{8D}$

FIG. 8D3

$1_{8D}$

FIG. 8D4

18D1

FIG. 8D5

18D2

FIG. 8D6

18D3

FIG. 8D7

18D4

FIG. 8D8

18D5

FIG. 8D9

18D6

FIG. 8D10

18D7

FIG. 9A

15

16

17

20A

1₈D

FIG. 10

91,93

A₁₀

92₁₀A, 94

18

16

17A

37

54
64A
65A

36"

1"₁₀A

4₁₀A    7₁₀A

R₂₀    R₁₀K

R₁₀A

R₃₆N

A₁₀

FIG. 9B

15C

16C

20B

17

1₈D

FIG. 11A

ZIRS108-M39
2 3/8 - 60mm HEX
1000 FT.LB

17₁₁A

17₁₁A

FIG. 11B

17₁₁B

FIG. 11C

17₁₁C

FIG. 13A

17B

FIG. 13B

10E

FIG. 12A

18A

18

20

36

1

30

FIG. 12B

10A

10C

FIG. 12C

10D

19A

19B

16

18

16

15A

17

18A

17

15

36

30

36

HYTORC

1

30

1

20

20

FIG. 14A

FIG. 14B

FIG. 15A

FIG. 15B

85

87

86

85

FIG. 15C

86

87

FIG. 15F

FIG. 15D

30

36

1

36

1

24

24

85

22

22

30

36 24

FIG. 15G

FIG. 15E

36

1

1

24

85

85

22

22

FIG. 16A

FIG. 16B

**FIG. 17A**

**FIG. 17B**

**FIG. 18**

**FIG. 19**

**FIG. 20**

**FIG. 21A**

**FIG. 21B**

**FIG. 22A**

**FIG. 22B**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120125163 A1
- US 4671142 A
- US 4706526 A
- US 5016502 A
- US RE33951 E
- US 6152243 A
- US 500060 D
- US 7765895 D
- US 5318397 A
- US 54999558 B
- US 5341560 A
- US 5539970 A
- US 5538379 A
- US 5640749 A
- US 5946789 A
- US 6230589 B
- US 6254323 B
- US 6461093 B
- US 6490952 B
- US 6609868 B
- US 6929439 B
- US 6883401 B
- US 6986298 B
- US 7003862 B
- US 7066053 B
- US 7125213 B
- US 7188552 B
- US 7207760 B
- US 7735397 B
- US 8079795 B
- US 7462007 B
- US 7857566 B
- US 6298752 B
- US 6490952 A
- US 7641579 B
- US 7798038 B
- US 7832310 B
- US 7950309 B
- US 8042434 B
- US 608614 D
- US 13577995 B
- US 2012125163 A1
- US 2009142155 A1
- EP 0988935 A1
- US 6966735 B1
- WO 200166964 A1
- US 2006090606 A1
- US 2007157736 A1
- WO 2011098923 A2
- US 2012211249 A1
- US 2007086874 A1
- US 8631724 B
- US 2014035375 W
- US 61940919